(19)

Europäisches
Patentamt
European
Patent Office
Office européen
des brevets

(11) **EP 2 091 175 A1**

(12) **EUROPEAN PATENT APPLICATION**

(43) Date of publication:
**19.08.2009 Bulletin 2009/34**

(51) Int Cl.:
***H04L 9/00*** (2006.01)

(21) Application number: **09000564.6**

(22) Date of filing: **16.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **18.02.2008 JP 2008036441**

(71) Applicant: **Kabushiki Kaisha Toshiba Minato-ku, Tokyo 105-8001 (JP)**

(72) Inventors:
• **Yonemura, Tomoko Tokyo 105-8001 (JP)**
• **Muratani, Hirofumi Tokyo 105-8001 (JP)**

(74) Representative: **HOFFMANN EITLE Patent- und Rechtsanwälte Arabellastrasse 4 81925 München (DE)**

(54) **Decryption processing apparatus, system, method, and computer program product**

(57) In a decryption processing apparatus (200; 950), a decompression processing unit (204) performs a decompression map to pieces of compressed data included in a compressed encrypted data, thereby obtaining the pieces of the encrypted data having each of the pieces of the compressed data decompressed, the decompression map being a process of inputting the compressed data and either the final output data or the auxiliary output data and being a process of outputting the encrypted data and the auxiliary output data, a decryption processing unit (203) performs a decryption process to each of the pieces of encrypted data, using a secret key corresponding to the public key, thereby obtaining the plain data, and a control unit (202) controls parallel execution of the decompression process and the decryption process, and controls the decryption process performed by the decryption processing unit (203) to the encrypted data output by the decompression processing unit (204), based on the decryption procedure.

FIG.1

EP 2 091 175 A1

**Description**

CROSS-REFERENCE TO RELATED APPLICATIONS

This application is based upon and claims the benefit of priority from the prior Japanese Patent Application No. 2008-36441, filed on Feb. 18, 2008; the entire contents of which are incorporated herein by reference.

BACKGROUND OF THE INVENTION

1. Field of the Invention

The present invention relates to a decryption processing apparatus, a system, a method, and a computer program product, to perform a decryption process of compressed encrypted data, by decompressing the compressed encrypted data obtained by encrypting and compressing plain data.

2. Description of the Related Art

Various schemes and protocols using a public key encryption to realize safe communication without a prior sharing of a key, and a public key such as electronic signature to guarantee validity of a digital document are widely used as a basic technique of network security. Further, based on progressive diversification of information terminals, various schemes and protocols using public keys have come to be used in compact devices, employing devised systems and mounting.

While a representative key size of a public key encryption is 1,024 bits, a key size of which decryption is considered difficult increases year by year, because of improved capacity of attackers along advancement of a computer. While an encrypted data size of a public key encryption is different depending on an encryption system, the encrypted data size is generally a few times of a key size. Therefore, the increase of a key size becomes a problem for a computer having insufficient memory capacity or insufficient communication band.

Therefore, an encryption compression technique for compressing an encrypted data size of a public key encryption in ElGamal encryption has been considered (K. Rubin and A. Silverberg, "Torus-Based Cryptography", CRYPTO 2003, Springer LNCS 2729, pp. 349-365, 2003). This encryption compression technique is based on a fact that when a subclass called algebraic torus of an aggregate of numbers used for a public key encryption is used, elements of the aggregate can be expressed by a small number of bits. As an improvement technique to increase a compression rate, that is, a proportion of a number of bits before being compressed to a number of bits after being compressed, a technique of using an additional input called an auxiliary input has been known (M. van Dijk and D. Woodruff, "Asymptotically Optimal Communication for Torus-based Cryptography", CRYPTO 2004, Springer LNCS 3152, pp. 157-178, 2004).

Assume that a map to convert an expression of a bit number of elements of an aggregate to an expression of a small number of bits is written as θ, and this θ is set as a compression map. In the compression map θ, when an encrypted data c is given as an input, a proper additional input $a_1$ is used to perform calculation using an equation (1), thereby obtaining γ as a compressed encrypted data, and an auxiliary output $a_2$.

$$\theta(c, a_1) = (\gamma, a_2) \qquad\qquad (1)$$

The expression of an original number of bits before the conversion based on the compression map θ can be obtained by calculating an decompression map $\theta^{-1}$ as an inverse map of θ of the expression of the number of bits after the conversion. As shown by an equation (2) using the decompression map $\theta^{-1}$. a group of γ as the compressed encrypted data and the auxiliary output (an intermediate output) $a_2$ is input to perform calculation, thereby obtaining the encrypted data c as the expression of the original number of bits and the additional input $a_1$.

$$\theta^{-1}(\gamma, a_2) = (c, a_1) \qquad\qquad (2)$$

The compression and decompression using the algebraic torus can be also applied to a signature in an electronic signature and an exchange message in a key exchange scheme, not only to the encrypted data in the public key encryption.

The encrypted data of the ElGamal encryption disclosed in "Torus-Based Cryptography" mentioned above

includes two elements ($c_1$, $c_2$). To improve a compression rate, the auxiliary output $a_2$ of a first element is used for the auxiliary input of a second element, as shown in equations (3-1) and (3-2).

$$\theta(c_1, \ a_1) = (\gamma_1, \ a_2) \hspace{4cm} (3\text{-}1)$$

$$\theta(c_2, \ a_2) = (\gamma_2, \ a_3) \hspace{4cm} (3\text{-}2)$$

The compressed encrypted data becomes ($\gamma_1$, $\gamma_2$, $a_3$), and can be shortened by the auxiliary output $a_2$. To decrypt the compressed encrypted data, the compressed encrypted data is first decompressed to convert the encrypted data into the original encrypted data ($c_1$, $c_2$) before the compression, and then, the encrypted data ($c_1$, $c_2$) is decrypted to obtain a plain data.

When the auxiliary output of the first compression is input as an auxiliary input of (i+1)th compression, the compressed encrypted data includes only the last auxiliary output. Therefore, the decompression process needs to be performed in an opposite order to the order of the compression process.

For example, when a message is compressed sequentially starting from a message (data transmitted and received, such as an encrypted data) calculated in the process at a transmitter side of the encryption process and the like, the encryption process and the compression process can be easily performed in parallel.

On the other hand, in the decryption process, a message decompressed in a necessary order is not necessarily obtained, and the decompression process and the decryption process cannot be performed in parallel. The decryption process needs to be performed after the decompression process is performed, as a series process. Therefore, even when a message can be compressed in a small number of bits on a communication path, a computer at a receiver side needs to load a storage medium such as a memory having a memory capacity capable of handling the original message.

SUMMARY OF THE INVENTION

According to one aspect of the present invention, a decryption processing apparatus includes a receiving unit that receives compressed encrypted data from an encryption processing apparatus via a network, the encryption processing apparatus performing an encryption process to plain data using a public key and output a plurality of pieces of encrypted data, and a compression process to perform a compression map to each of the pieces of the encrypted data to output compressed encrypted data obtained by compressing the encrypted data and auxiliary output data as an intermediate output from the encrypted data and additional input data, thereby outputting the compressed encrypted data including the pieces of the compressed data and final output data finally output as the auxiliary output data; a storage unit that stores a decryption procedure which determines in advance an order of a decompression process of the pieces of the compressed data and an order of a decryption process of the pieces of the encrypted data, based on an output order of the pieces of the encrypted data in the encryption process and an input order of the pieces of the encrypted data and the additional input data to the compression map; an decompression processing unit that performs a decompression map to the pieces of the compressed data included in the compressed encrypted data, thereby obtaining the pieces of the encrypted data having each of the pieces of the compressed data decompressed, the decompression map being a process of inputting the compressed data and either the final output data or the auxiliary output data and being a process of outputting the encrypted data and the auxiliary output data; a decryption processing unit that performs a decryption process to each of the pieces of encrypted data, using a secret key corresponding to the public key, thereby obtaining the plain data; and a control unit that controls parallel execution of the decompression process and the decryption process, and controls the decryption process performed by the decryption processing unit to the encrypted data output by the decompression processing unit, based on the decryption procedure.

According to another aspect of the present invention, an encryption processing system includes an encryption processing apparatus; and a decryption processing apparatus connected to the encryption processing apparatus via a network, wherein the encryption processing apparatus includes an encryption processing unit that performs an encryption process to plain data using a public key, and outputs a plurality of pieces of encrypted data, a compression processing unit that performs a compression map to each of the pieces of the encrypted data, and outputs compressed encrypted data including the pieces of the compressed data and final output data finally output as the auxiliary output data, the compression map being a process of outputting compressed data obtained by compressing the encrypted data and auxiliary output data as an intermediate output from the encrypted data and additional input data, a transmitting unit that transmits the compressed encrypted data to the decryption processing apparatus, a first storage unit that stores an encryption procedure which determines in advance an order of an encryption process of the plain data and an order of a compression process of the pieces of the encrypted data, based on an output order of the pieces of the encrypted data in the encryption process and an input order of the pieces of the encrypted data and the additional input data to the compression map, and a first control unit that controls parallel execution of the encryption process and the compression process, and controls the compression process performed by the compression processing unit to the pieces of the encrypted data output by the encryption processing unit, based on the encryption procedure, the encryption processing unit performs an encryption process to the plain data using the hash function inputting compressed data output by the compression map, the decryption processing apparatus includes a receiving unit that receives the compressed encrypted data from the encryption processing apparatus, a storage unit that stores a decryption procedure which determines in advance an order of a decompression process of the pieces of the compressed data and an order of a decryption process of the pieces of the encrypted data, based on an output order of the pieces of the encrypted data in the encryption process and an input order of the pieces of the encrypted data and the additional input data to the compression map, a decompression processing unit that performs a decompression map to the pieces of the compressed data included in the compressed encrypted data, thereby obtaining the pieces of the encrypted data having each of the pieces of the compressed data decompressed, the decompression map being a process of inputting the compressed data and either the final output data or the auxiliary output data and being a process of outputting the encrypted data and the auxiliary output data, a decryption processing unit that performs a decryption process to each of the pieces of the encrypted data, using a secret key corresponding to the public key, thereby obtaining the plain data, and a second control unit that that controls parallel execution of the decompression process and the decryption process, and controls the decryption process performed by the decryption processing unit to the encrypted data output by the decompression processing unit, based on the decryption procedure, and the decryption processing unit performs a decryption process to each of the pieces of the encrypted data, using the hash function inputting the compressed data.

According to still another aspect of the present invention, a decryption processing method performed by a decryption processing apparatus, the method includes receiving compressed encrypted data from an encryption processing apparatus via a network, the encryption processing apparatus performing an encryption process to plain data using a public key and output a plurality of pieces of encrypted data, and a compression process to perform a compression map to each of the pieces of the encrypted data to output compressed encrypted data obtained by compressing the encrypted data and auxiliary output data as an intermediate output from the encrypted data and additional input data, thereby outputting the compressed encrypted data including the pieces of the compressed data and final output data finally output as the auxiliary output data; performing a decompression map to the pieces of the compressed data included in the compressed encrypted data, thereby obtaining the pieces of the encrypted data having each of the pieces of the compressed data decompressed, the decompression map being a process of inputting the compressed data and either the final output data or the auxiliary output data and being a process of outputting the encrypted data and the auxiliary output data; performing a decryption process to each of the pieces of encrypted data, using a secret key corresponding to the public key, thereby obtaining the plain data; and controlling parallel execution of the decompression process and the decryption process, and controlling the decryption process by the decryption processing unit to the encrypted data output by the decompression processing unit, based on a decryption procedure of a storage unit that stores the decryption procedure which determines in advance an order of a decompression process of the pieces of the compressed data and an order of a decryption process of the pieces of the encrypted data, based on an output order of the pieces of the encrypted data in the encryption process and an input order of the pieces of the encrypted data and the additional input data to the compression map.

A computer program product according to still another aspect of the present invention causes a computer to perform the method according to the present invention.

BRIEF DESCRIPTION OF THE DRAWINGS

Fig. 1 is a block diagram of a network configuration and a functional configuration of an encryption processing system according to a first embodiment of the present invention;
Fig. 2 is a schematic diagram for explaining an ElGamal encryption scheme;
Fig. 3 is a schematic diagram for explaining a conventional procedure of an encryption and compression process and a decompression and decryption process in a torus-compression ElGamal encryption scheme;
Fig. 4 is a schematic diagram for explaining a procedure of an encryption process in the torus-compression ElGamal encryption scheme according to the first embodiment;
Fig. 5 is a flowchart of a procedure of a decompression process and a decryption process in the torus-compression ElGamal encryption scheme according to the first embodiment;
Fig. 6 is a schematic diagram for explaining a procedure of processing encryption and decryption in a Cramer-Shoup encryption scheme;

Fig. 7 is a schematic diagram for explaining an encryption process in the torus-compression Cramer-Shoup encryption scheme according to the first embodiment;

Fig. 8 is a flowchart of a procedure of a decompression process and a decryption process in the torus-compression Cramer-Shoup encryption scheme according to the first embodiment;

Fig. 9 is a block diagram of a network configuration and a functional configuration of an encryption processing system according to a second embodiment of the present invention;

Fig. 10 is a schematic diagram for explaining a procedure of processes in a torus-compression Cramer-Shoup encryption scheme according to the second embodiment;

Fig. 11 is a flowchart of a procedure of a decryption process and a compression process in the torus-compression Cramer-Shoup encryption scheme according to the second embodiment;

Fig. 12 is a flowchart of a procedure of a decompression process and a decryption process in the torus-compression Cramer-Shoup encryption scheme according to the second embodiment;

Fig. 13 is a schematic diagram for explaining a procedure of an encryption process in a torus-compression Cramer-Shoup encryption scheme according to a modification of the second embodiment;

Fig. 14 is a flowchart of a procedure of an encryption process and a compression process in the torus-compression Cramer-Shoup encryption scheme according to the modification; and

Fig. 15 is a flowchart of a procedure of a decompression process and a decryption process in the torus-compression Cramer-Shoup encryption scheme according to the modification.

DETAILED DESCRIPTION OF THE INVENTION

Exemplary embodiments a decryption processing apparatus, an encryption processing system, a decryption processing method, and a computer program product according to the present invention will be explained below in detail with reference to the accompanying drawings.

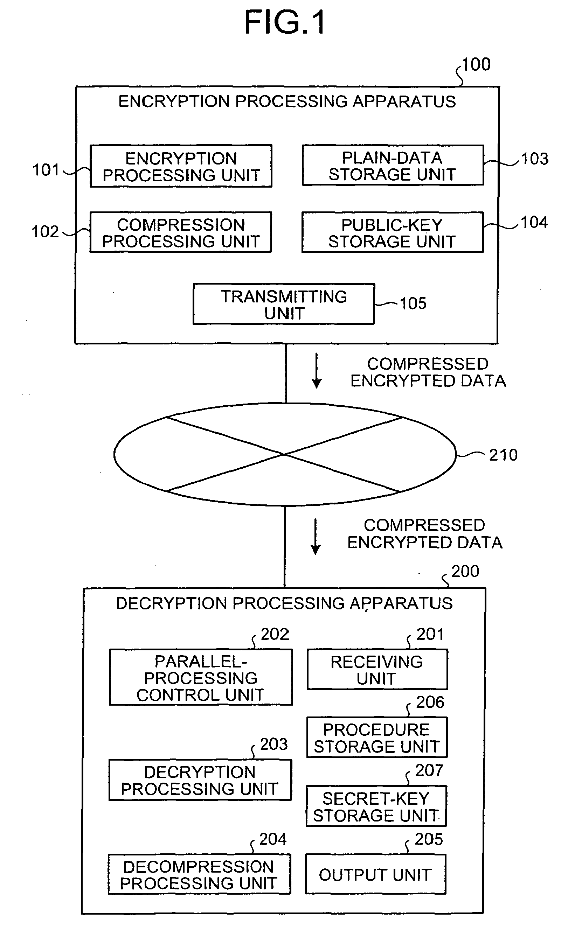

An encryption processing system according to a first embodiment of the present invention includes an encryption processing apparatus 100 and a decryption processing apparatus 200 connected to a network 210 such as the Internet, as shown in Fig. 1.

The encryption processing apparatus 100 is an information processing apparatus such as a personal computer (PC) that performs an encryption process to plain data using a public key, compresses encrypted data obtained by the encryption process, thereby generating compressed encrypted data, and transmits the generated compressed encrypted data to the decryption processing apparatus 200 having a secret key corresponding to the public key.

The decryption processing apparatus 200 is an information processing apparatus such as a PC that receives compressed encrypted data from the encryption processing apparatus 100, decompresses the received compressed encrypted data, and decrypts this data thereby obtaining plain data.

First, the encryption processing apparatus 100 is explained. As shown in Fig. 1, the encryption processing apparatus 100 mainly includes an encryption processing unit 101, a compression processing unit 102, a plain- data storage unit 103, a public-key storage unit 104, and a transmitting unit 105.

The plain- data storage unit 103 is a storage medium such as a memory and a hard disk drive (HDD) that store plain data to be encrypted. The public-key storage unit 104 is a storage medium such as a memory and an HDD that store a public key used in the encryption process performed by the encryption processing unit 101.

The encryption processing unit 101 performs an encryption process to the plain data m using a public key, based on a discrete logarithm problem on a finite field, and outputs plural pieces of encrypted data. Specifically, the encryption processing unit 101 performs an encryption process to the plain data m, using a hash function H using plural times of exponentiation or multiplication or encrypted data as an input value, and outputs plural pieces of encrypted data c, based on an ElGamal encryption scheme or a Cramer-Shoup encryption scheme, as an encryption system based on a discrete logarithm problem on the finite field.

The compression processing unit 102 compresses plural pieces of encrypted data c output by the encryption processing unit 101, and outputs the compressed encrypted data including plural pieces of compressed data, based on an torus compression system employed. That is, the compression processing unit 102 performs a compression map $\theta$ to each of the pieces of the encrypted data, and outputs compressed encrypted data including plural pieces of compressed data and final output data finally output as auxiliary output data, the compression map $\theta$ being based on an algebraic torus of outputting the compressed data $\gamma$ obtained by compressing the encrypted data c and the auxiliary output data a as an intermediate output, from each of the pieces of encrypted data and the additional input data a as an additional input. In performing the compression map $\theta$ to the encrypted data c at an nth time (n is an integer equal to or larger than two) in the compression process, this compression processing unit 102 inputs, as additional input data, the auxiliary output data output by an (n-1)th compression map $\theta$, and outputs the auxiliary output data and the compressed data.

The transmitting unit 105 transmits compressed encrypted data output by the encryption processing unit 101 and the compression processing unit 102, to the decryption processing apparatus 200 via the network 210.

The decryption processing apparatus 200 is explained next. As shown in Fig. 1, the decryption processing apparatus 200 mainly includes a receiving unit 201, a decryption processing unit 203, a decompression processing unit 204, a parallel-processing control unit 202, an output unit 205', a secret-key storage unit 207, and a procedure storage unit 206.

The receiving unit 201 receives compressed encrypted data from the encryption processing device 100 via the network.

The decompression processing unit 204 decompresses compressed data contained in the received compressed encrypted data, using final output data contained in compressed encrypted data of a torus compression system, and outputs plural pieces of encrypted data. That is, the decompression processing unit 204 performs the decompression map $\theta^{-1}$ (an inverse image of a compression map based on an algebraic torus) to plural pieces of compressed data contained in the compressed encrypted data, thereby obtaining plural pieces of encrypted data having each of the pieces of compressed data decompressed, where the decompression map $\theta^{-1}$ is outputting of encrypted data and auxiliary output data by inputting compressed data and final output data or auxiliary output data. Specifically, in initially inputting compressed data to the decompression map $\theta^{-1}$, the decompression processing unit 204 inputs a piece of compressed data and final output data contained in the compressed encrypted data. In inputting compressed data to the decompression map $\theta^{-1}$ at an nth (n is an integer equal to or larger than two) time, the decompression processing unit 204 inputs to the decompression map $\theta^{-1}$, compressed data different from the piece of compressed data, and the auxiliary output data output by the decompression map $\theta^{-1}$ at the (n-1)th time.

The secret-key storage unit 207 is a storage medium such as a memory and an HDD that store a secret key used to decrypt the encrypted data. The secret key corresponds to the public key used by the encryption processing apparatus to encrypt the plain data.

The decryption processing unit 203 performs a decryption process to each of the pieces of encrypted data decompressed by the decompression processing unit 204, based on a discrete logarithm problem on a finite field, using a secret key stored in the secret-key storage unit 207, and outputs the plain data m. Specifically, the decryption processing unit 203 performs a decryption process to plural pieces of encrypted data c, using a hash function H using plural times of exponentiation or multiplication or encrypted data c as an input value, and obtains the plain data m, based on the ElGamal encryption scheme or the Cramer-Shoup encryption scheme.

The procedure storage unit 206 is a storage medium such as a hard-disk drive device and a memory that stores a decryption procedure. The decryption procedure determines an encryption compression protocol in advance, that is, an order of decompression process of plural pieces of compressed data and an order of a decryption process of plural pieces of encrypted data, based on an output order in an encryption process of plural pieces of encrypted data, and an input order of plural pieces of encrypted data and additional input data to the compression map $\theta$. A detail of the decryption process is described later.

The parallel-processing control unit 202 controls the parallel execution so that the decompression processing unit 204 performs the decompression process of plural pieces of compressed data, and the decryption processing unit 203 performs the decryption process of the decompressed plural pieces of encrypted data, following the order of the decompression process of plural pieces of compressed data and the order of the decryption process of plural pieces of encrypted data determined by the decryption procedure stored in the procedure storage unit 206. The parallel-processing control unit 202 also causes the decryption processing unit 203 to decrypt the encrypted data output by the decompression processing unit 204. That is, the parallel-processing control unit 202 references a decryption procedure, determines based on the above order, a process to be performed in parallel and a process to be performed in series among the decompression process and the decryption process, and transmits an execution instruction to the decompression processing unit 204 and the decryption processing unit 203 based on a result of the determination.

Details of the decryption procedure, and the parallel execution of the decompression process performed by the decompression processing unit 204 and the decryption process performed by the decryption processing unit 203 are described later.

The output unit 205 outputs the decrypted plain- data m to a display device (not shown) such as a monitor, and to a printer device and the like.

Next, a detail of the decryption procedure is explained. In the first embodiment, as a torus-compression-public-key encryption system, a plain data is encrypted, compressed, decompressed, and decrypted by a torus-compression ElGamal encryption scheme.

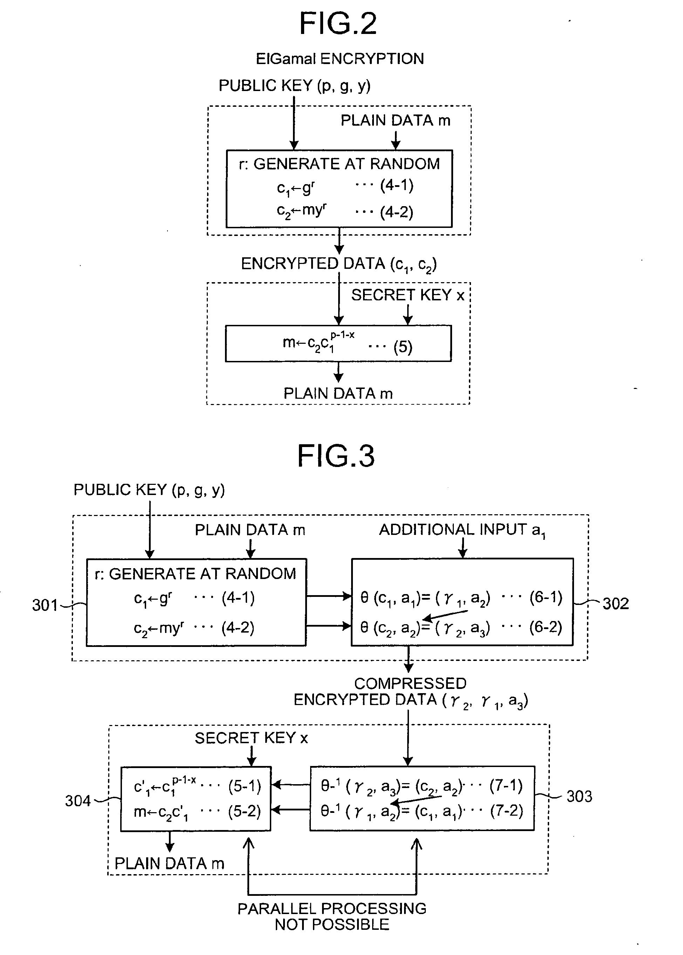

First, a procedure of processing the encryption and decryption processes by the ElGamal encryption scheme is explained with reference to Fig. 2. In Fig. 2, p denotes a prime width, g denotes a generator of a cyclic group G (order is p-1) defining a cryptograph, y denotes an element of G satisfying $y = g^x$, and x denotes a secret key. The plain data m also needs to be an element of G.

In the encryption process, encrypted dataes $c_1$ and $c_2$ corresponding to the plain data m are calculated. Specifically, as shown by an equation (4-1), the encrypted data $c_1$ is obtained by calculating r power of the generator g, using a random number r generated at random. Next, as shown by an equation (4-2), the plain data m is multiplied to the r power of the element y, thereby obtaining the encrypted data $c_2$.

In the decryption process, the plain data m is calculated from the secret key x (an integer from 1 to p-1) and the encrypted data $c_1$ and $c_2$. Specifically, as shown in an equation (5), power (p-x) of the encrypted data $c_1$ is multiplied to the encrypted data $c_2$ to obtain the plain data m.

A conventional encryption and compression process, and a conventional decompression and decryption process according to a torus-compression ElGamal encryption scheme (see K. Rubin and A. Silverberg, "Torus-Based Cryptography") as a system that compresses an encrypted data in this ElGamal encryption scheme are explained. Fig. 3 depicts a procedure of the conventional encryption and compression process and the conventional decompression and decryption process in the torus-compression ElGamal encryption scheme.

In Fig. 3, θ denotes the compression map, and $\gamma_1$ and $\gamma_2$ denote compressed data obtained by compressing the encrypted data $c_1$ and $c_2$ by the compression map θ. Reference symbols $a_1$ and $a_2$ are additional input data that are input together with the encrypted datas $c_1$ and $c_2$ at the time of inputting to the compression map θ, respectively. The additional input data $a_1$ is optionally determined. The additional input data $a_2$ is obtained as auxiliary output data that is output together with the compressed data $\gamma_1$ from the compression map θ when the encrypted data $c_1$ is compressed. Reference symbol $a_3$ denotes auxiliary data that is output together with the compressed data $\gamma_1$ from the compression map θ, and becomes final output data.

As shown in Fig. 3, an encryption process 301 is performed in the order of calculation of the encrypted data $c_1$ by the equation (4-1), and calculation of the encrypted data $c_2$ by the equation (4-2). A compression process 302 is performed in the order of a compression of the encrypted data $c_1$ by an equation (6-1), and a compression of the encrypted data $c_2$ by an equation (6-2). The order of the compression is the same of the encrypted data generated by the encryption process 301.

That is, in the compression process 302, the encrypted data $c_1$ and the additional input data $a_1$ are input to the compression map θ, and the compressed data $\gamma_1$ and the auxiliary output data $a_2$ are obtained by the equation (6-1). The obtained auxiliary input data $a_2$ and the encrypted data $c_2$ are input to the compression map θ, and the compressed data $\gamma_2$ and the auxiliary output data $a_3$ as the final output data are obtained, by the equation (6-2). Compressed encrypted data ($\gamma_1$, $\gamma_2$, $a_3$) configured by the compressed data $\gamma_1$, $\gamma_2$ and the final output data $a_3$ are transmitted to the decryption processing apparatus 200.

On the other hand, a decompression process 303 is performed in the order of a decompression process of the compressed data $\gamma_2$ by an equation (7-1) and the decompression process of the compressed data $\gamma_1$ by an equation (7-2), that is, in the order of calculation of the encrypted data $c_2$ and calculation of the encrypted data $c_1$, in the opposite order of the order of the compression process. That is, in the decompression process 303, the compressed data $\gamma_2$ and the final output data (the auxiliary output data) $a_3$ of the compressed encrypted data ($\gamma_1$, $\gamma_2$, $a_3$) are input to the decompression map $\theta^{-1}$, and the encrypted data $c_2$ and the auxiliary output data $a_2$ are obtained by the equation (7-1). Next, the auxiliary output data $a_2$ and the compressed data $\gamma_1$ that are obtained are input to the decompression map $\theta^{-1}$, and the encrypted data $c_1$ and the additional input data $a_1$ are obtained, by the equation (7-2). In a decryption process 304, $c_1$' is obtained by an equation (5-1), using the encrypted data $c_1$ obtained by the equation (7-1), and the plain data m is obtained by an equation (5-2), using $c_1$' obtained by the equation (5-1) and using the encrypted data $c_2$ obtained by the equation (7-1).

As explained above, according to the procedure of the processes in the conventional torus-compression ElGamal encryption scheme, the decompression process 303 first obtains the encrypted data $c_2$ by the equation (7-1), and the decryption process 304 first performs the equation (5-1), using the encrypted data $c_1$. Therefore, the decompression process 303 and the decryption process 304 can be performed in series only, and both processes cannot be performed in parallel.

Therefore, in the first embodiment, the procedure of the encryption process and the compression process in the torus-compression ElGamal encryption scheme is determined in the order capable of performing in parallel the decompression process and the decryption process. Further, the procedure of the decompression process and the decryption process is determined in advance to perform these processes in parallel. These determined procedures are stored in the procedure storage unit 206.

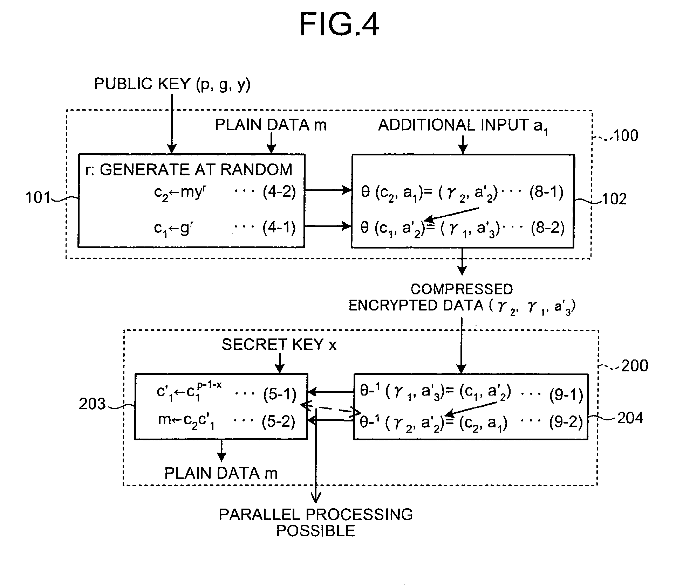

Fig. 4 depicts a procedure of the encryption process and the compression process, and the decompression process and the decryption process (hereinafter, "torus-compression ElGamal encryption procedure") in the torus-compression ElGamal encryption scheme according to the first embodiment.

It is determined that the encryption processing unit 101 of the encryption processing apparatus 100 according to the first embodiment performs the encryption process in the procedure of first calculating the encrypted data $c_2$ by the equation (4-2), and next calculating the encrypted data $c_1$ by the equation (4-1), in the opposite procedure to the conventional procedure. It is determined that the compression processing unit 102 performs the compression process in the procedure of first compressing the encrypted data $c_2$ by an equation (8-1), and next compressing the encrypted data $c_1$, in the opposite procedure to the conventional procedure. That is, the encrypted data $c_2$ and the additional input data $a_1$ are input to the compression map θ, and the compressed data $\gamma_1$ and auxiliary output data $a'_2$ are obtained, by

the equation (8-1). Next, the auxiliary input data $a'_2$ and the encrypted data $c_1$ obtained are input to the compression map $\theta$, and the compressed data $\gamma_1$ and auxiliary output data $a'_3$ as final output data are obtained, by an equation (8-2). Compressed encrypted data ($\gamma_2$, $\gamma_1$, $a'_3$) configured by the compressed data $\gamma_2$, $\gamma_1$ and the final output data $a'_3$ are transmitted to the decryption processing apparatus 200.

Therefore, the decompression processing unit 204 of the decryption processing apparatus 200 performs the decompression process in the procedure of first decompressing the compressed data $\gamma_1$ by an equation (9-1) and next decompressing the compressed data $\gamma_2$ by an equation (9-2), that is, in the opposite order of the compression process. That is, by following this procedure, the decompression processing unit 204 inputs the compressed data $\gamma_1$ and the final output data (the auxiliary output data) $a'_3$ of the compressed encrypted data ($\gamma_2$, $\gamma_1$, $a'_3$) to the decompression map $\theta^{-1}$, thereby first obtaining the encrypted data $c_1$ and the auxiliary output data $a'_2$. Next, the decompression processing unit 204 inputs the auxiliary output data $a'_2$ and the compressed data $\gamma_2$ obtained, to the decompression map $\theta^{-1}$, thereby obtaining the encrypted data $c_2$ and the additional input data $a_1$. The decryption processing unit 203 performs the decryption process, by first obtaining $c_1'$ by the equation (5-1) using the encrypted data $c_1$, and next obtaining the plain data m by the equation (5-2) using the obtained $c_1'$, like in the conventional method shown in Fig. 3.

That is, according to the encryption processing procedure and the compression processing procedure of the first embodiment, the process of the encrypted data $c_2$ is performed before the process of the encrypted data $c_1$. Therefore, in the decompression processing procedure and the decryption processing procedure, the process of the encrypted data $c_1$ can be performed before the process of the encrypted data $c_2$. Because the encrypted data $c_1$ can be obtained by the equation (9-1), the decryption process by the equation (5-1) using the encrypted data $c_1$ and the decompression process of obtaining the encrypted data $c_2$ can be performed in parallel.

The sequential performing of the equations in the order of the equation (4-2), the equation (4-1), the equation (8-1), the equation (8-2), the equation (9-1), the equation (9-2) & the equation (5-1), and the equation (5-2) is described as the torus-compression ElGamal encryption procedure, and is stored in the procedure storage unit 206. In the above, "&" indicates that parallel execution is possible.

Therefore, the parallel-processing control unit 202 according to the first embodiment reads the torus-compression ElGamal encryption procedure stored in the procedure storage unit 206, and controls so that the decryption processing unit 203 performs the decryption process by the equation (5-1) using the encrypted data $c_2$, and the decompression processing unit 204 performs the decompression process to obtain the encrypted data $c_2$, from the procedure of the equation (9-2) & the equation (5-1), in parallel processing.

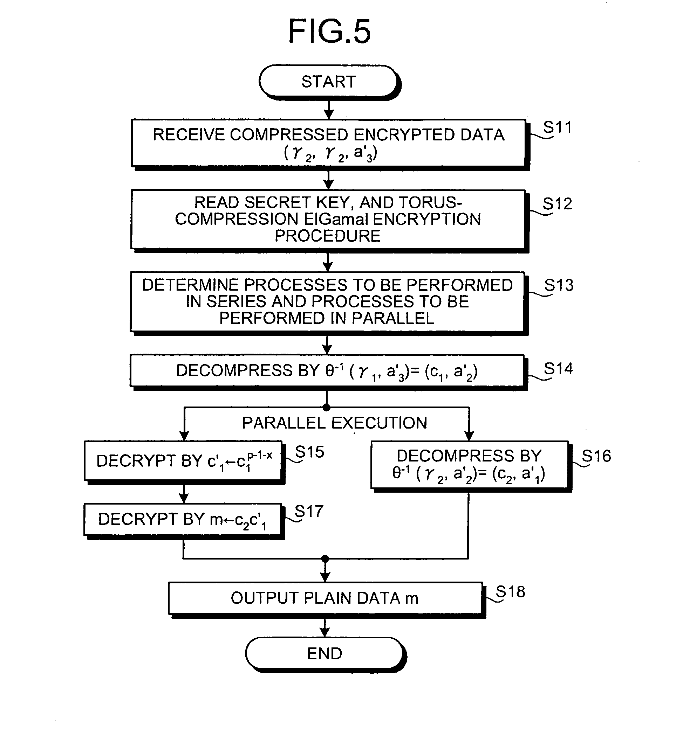

The decompression process and the decryption process performed by the decryption processing apparatus 200 according to the first embodiment having the above configuration are explained next. Fig. 5 depicts a procedure of the decompression process and the decryption process in the torus-compression ElGamal encryption scheme according to the first embodiment.

First, the receiving unit 201 receives the compressed encrypted data ($\gamma_2$, $\gamma_1$, $a'_3$) from the encryption processing apparatus 100 (Step S11). The decryption processing unit 203 then reads the secret key x from the secret-key storage unit 207, and the parallel-processing control unit 202 reads the torus-compression ElGamal encryption procedure from the procedure storage unit 206 (Step S12).

Next, the parallel-processing control unit 202 determines processes to be performed in series and processes to be performed in parallel, from the read torus-compression ElGamal encryption procedure (Step S13), and instructs the decompression processing unit 204 and the decryption processing unit 203 to perform these processes. Specifically, the parallel-processing control unit 202 determines that the processes in the procedure described by "&" such as a the equation (9-2) and the equation (5-1) in the torus-compression ElGamal encryption procedure are to be processed in parallel, and determines that other processes are executed in the described order. The parallel-processing control unit 202 instructs the decompression processing unit 204 and the decryption processing unit 203 to perform these processes.

First, the decompression processing unit 204 decompresses the compressed data $\gamma_1$, by the equation (9-1), using the compressed encrypted data ($\gamma_2$, $\gamma_1$, $a'_3$) and the final output data (the auxiliary output data) $a'_3$ received, and obtains the encrypted data $c_1$ and the auxiliary output data $a'_2$ (Step S14).

Next, in the parallel processing, the decompression processing unit 204 performs the process of decompressing the compressed data $\gamma_2$ by the equation (9-2) using the obtained auxiliary output data $a'_2$ (Step S16), and the decryption processing unit 203 performs the decryption process of obtaining $c_1'$ by the equation (5-1) using the encrypted data $c_1$ obtained at Step S14 (Step S15).

The decryption processing unit 203 then performs the decryption process of obtaining the plain data m by the equation (5-2) using $c_1'$ obtained at Step S14 (Step S17). The output unit 205 outputs the obtained plain data m (Step S18).

As explained above, in the procedure of the decompression process and the decryption process in the torus-compression ElGamal encryption scheme according to the first embodiment, the equation (5-1) and the equation (9-2) are determined to be able to be performed in advance. The decompression processing unit 204 and the decryption processing unit 203 perform these processes in parallel.

In the first embodiment, the procedure of the encryption process and the compression process in a torus-compression Cramer-Shoup encryption scheme is determined in the order of being able to perform the decompression process and the decryption process in parallel. Further, the decompression process and the decryption process are determined in advance to be processed in parallel. These procedures are stored in the procedure storage unit 206.

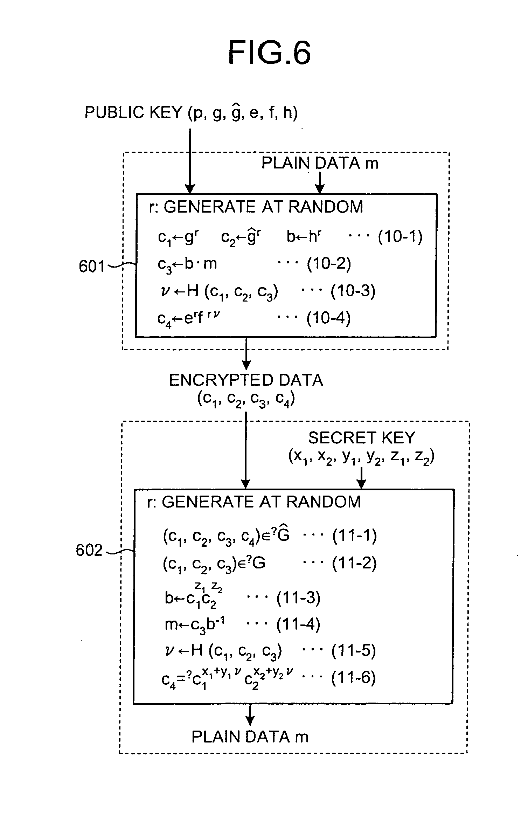

First, the procedure of processing the encryption and decryption processes in the Cramer-Shoup encryption scheme is explained with reference to Fig. 6. In Fig. 6, reference symbol q denotes a prime number, g denotes the generator of the group G defining a cryptograph, and $g^\wedge$, e, f, h denote elements of the group G. The plain data m is also an element of G. Reference symbol r denotes a random number generated at random.

In an encryption process 601, encrypted data $(c_1, c_2, c_3, c_4)$ corresponding to the plain data m is calculated by equations (10-1) to (10-4). In the equation (10-3), H denotes the hash function. A hash value $v$ is obtained by inputting encrypted data to the hash function H. A secret key has an integer value ranging from 1 to q.

In a decryption process 602, whether a valid plain data is obtained from secret keys $(x_1, x_2, y_1, y_2, z_1, z_2)$ and the encrypted data $(c_1, c_2, c_3, c_4)$, by equations (11-1) to (11-6), and the plain data m is calculated. The secret keys $(x_1, x_2, y_1, y_2, z_1, z_2)$ are integers from 1 to q. An expression $c \in {}^? G$ (or $G^\wedge$) indicates whether c belongs to the group G (or the group $G^\wedge$).

In the decryption process 602, encrypted data is used in the order of $c_1, c_2, c_3, c_4$ or in the order of $c_2, c_1, c_3, c_4$. Therefore, it can be understood that to parallelize the decompression process and the decryption process, the encrypted data is used in the order of $c_1, c_2, c_3, c_4$ in the decompression process.

In the first embodiment, in the torus-compression Cramer-Shoup encryption scheme, the procedure of the decompression process is determined such that the encrypted data is used in the order of $c_1, c_2, c_3, c_4$, and the procedure of the decryption process is determined such that the encrypted data is used in the order of $c_1, c_2, c_3, c_4$. A procedure enabling the parallel execution of the decompression process and the decryption process is stored in the procedure storage unit 206.

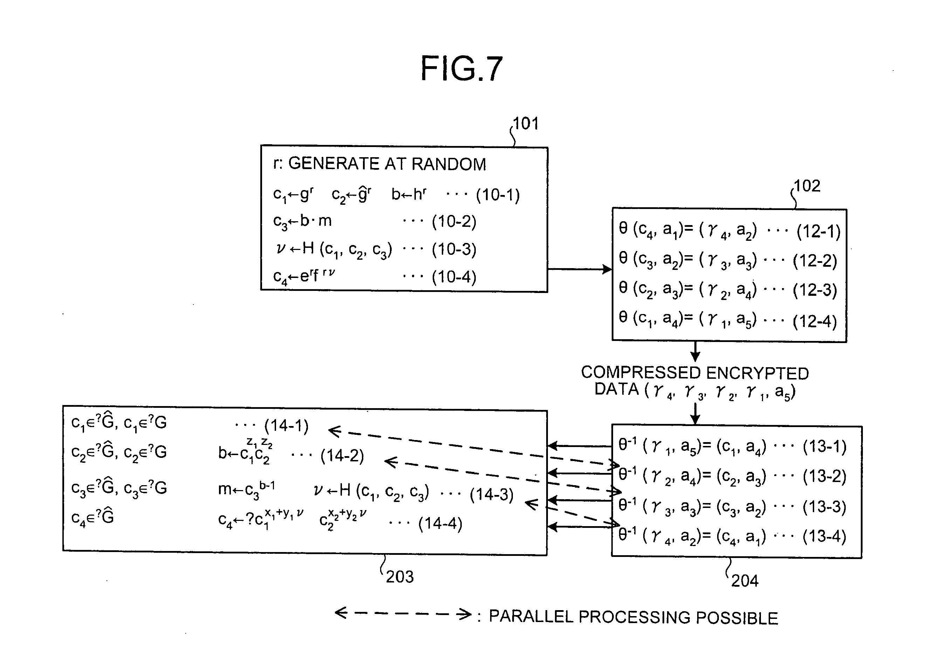

Fig. 7 depicts a procedure of the encryption process and the compression process, and the decompression process and the decryption process in the torus-compression Cramer-Shoup encryption scheme (hereinafter, "torus-compression Cramer-Shoup encryption procedure") according to the first embodiment.

In the encryption processing apparatus 100 according to the first embodiment, the encryption processing unit 101 performs the encryption process in the order of the equations (10-1) and (10-2), like in the procedure of the encryption process shown in Fig. 6, thereby obtaining the encrypted data in the order of $c_1, c_2, c_3$. The encryption processing unit 101 inputs the encrypted data $c_1, c_2, c_3$ to the hash function H, and obtains the hash value v, by the equation (10-3). The encryption processing unit 101 obtains the encrypted data $c_4$ by the equation (10-4) using the value v. The compression processing unit 102 obtains the compressed data $\gamma_4, \gamma_3, \gamma_2, \gamma_1$, in the order of equations (12-1), (12-2), (12-3), (12-4), that is, in the order of the encrypted data $c_4, c_3, c_2, c_1$. In this case, $a_1$ is additional input data, and $a_2, a_3, a_4, a_5$ are auxiliary output data. The auxiliary output data $a_2$ is input to the compression map of the equation (12-2) as the additional input data. The auxiliary output data $a_3$ is input to the compression map of the equation (12-3) as the additional input data. The auxiliary output data $a_4$ is input to the compression map of the equation (12-4) as the additional input data. Compressed encrypted data $(\gamma_4, \gamma_3, \gamma_2, \gamma_1, a_5)$ configured by the compressed data $\gamma_4, \gamma_3, \gamma_2, \gamma_1$, and auxiliary output data $a_5$ as final output data are transmitted to the decryption processing apparatus 200.

The decompression processing unit 204 of the decryption processing apparatus 200 performs the decompression process in the order of the decompression process of the compressed data $\gamma_1$ by an equation (13-1), the decompression process of the compressed data $\gamma_2$ by an equation (13-2), the decompression process of the compressed data $\gamma_3$ by an equation (13-3), and the decompression process of the compressed data $\gamma_4$ by an equation (13-4). More specifically, following the above procedure, the decompression processing unit 204 inputs the compressed data $\gamma_1$ of the compressed encrypted data $(\gamma_4, \gamma_3, \gamma_2, \gamma_1, a_5)$ and the final output data (the auxiliary output data) as to the decompression map $\theta^{-1}$, and first obtains the encrypted data $c_1$ and the auxiliary output data $a_4$, by the equation (13-1), and then inputs the auxiliary output data $a_4$ and the compressed data $\gamma_2$ obtained, to the decompression map $\theta^{-1}$, and obtains the encrypted data $c_2$ and the additional input data $a_3$, by the equation (13-2). Further, the decompression processing unit 204 inputs the auxiliary output data $a_3$ and the compressed data $\gamma_4$ obtained, to the decompression map $\theta^{-1}$, and obtains the encrypted data $c_3$ and the additional input data $a_2$, by the equation (13-3), and next inputs the auxiliary output data $a_2$ and the compressed data $\gamma_4$ obtained, to the decompression map $\theta^{-1}$, and obtains the encrypted data $c_4$ and the additional input data $a_1$, by the equation (13-4). That is, the decompression process is performed in the order of the calculation of the encrypted data $c_1$, the calculation of the encrypted data $c_2$, the calculation of the encrypted data $c_3$, and the calculation of the encrypted data $c_4$.

The decryption processing unit 203 performs the decryption process in the order of using the encrypted data calculated by the decompression process, that is, in the order of an equation (14-1) using the encrypted data $c_1$, an equation (14-2) using the encrypted data $c_2$, an equation (14-3) using the encrypted data $c_3$, and an equation (14-4) using the encrypted data $c_4$.

Therefore, after the encrypted data $c_1$ is obtained by the equation (13-1) of the decompression process, the equation (13-2) of the decompression process and the equation (14-1) of the decryption process can be performed.

After the encrypted data $c_2$ is obtained by the equation (13-2), the equation (13-3) of the decompression process and the equation (14-2) of the decryption process can be similarly performed. After the encrypted data $c_3$ is obtained by the equation (13-3), the equation (13-4) of the decompression process and the equation (14-3) of the decryption process can be similarly performed.

Accordingly, the expansion process and the decryption process according to the first embodiment are described to be performed in the order of the equation (13-1), the equation (13-2) & the equation (14-1), the equation (13-3) & the equation (14-2), the equation (13-4) & the equation (14-3), and the equation (14-4), as the torus-compression Cramer-Shoup encryption procedure, and this procedure is stored in the procedure storage unit 206.

Consequently, the parallel-processing control unit 202 according to the first embodiment reads the torus-compression Cramer-Shoup encryption procedure stored in the procedure storage unit 206, and controls the decompression processing unit 204 and the decryption processing unit 203 to perform the parallel processing of the equation (13-2) and the equation (14-1), the parallel processing of the equation (13-3) and the equation (14-2), and the parallel processing of the equation (13-4) and the equation (14-3), based on the above procedure of the equation (13-2) & the equation (14-1), the equation (13-3) & the equation (14-2), and the equation (13-4) & the equation (14-3).

In the encryption process, the encrypted data are generated in the order of the encrypted data $c_1$, $c_2$, $c_3$ (any one of these can be first), and the encrypted data $c_4$. On the other hand, in the compression process, the encrypted data are compressed in the order of $c_4$, $c_3$, $c_2$, $c_1$. Therefore, the compression process is started after the encrypted data $c_4$ is obtained. Accordingly, the encryption process and the decryption process are performed in series without being performed in parallel.

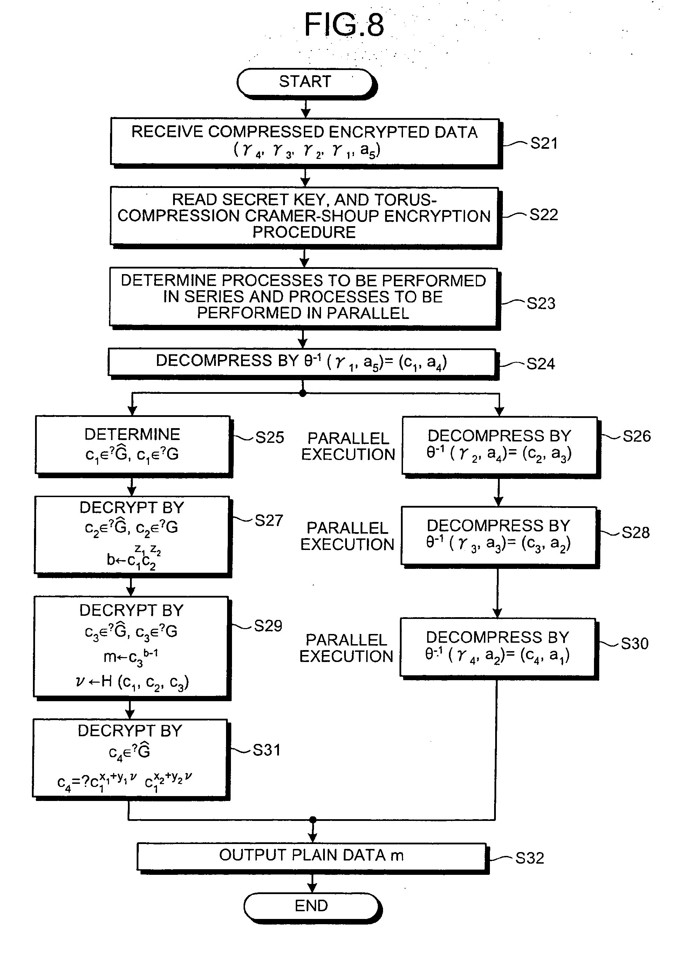

The decompression process and the decryption process based on the torus-compression Cramer-Shoup encryption procedure according to the first embodiment are explained with reference to Fig. 8.

First, the receiving unit 201 receives the compressed encrypted data ($\gamma_4$, $\gamma_3$, $\gamma_2$, $\gamma_1$, $a_5$) from the encryption processing apparatus 100 (Step S21). The decryption processing unit 203 reads the secret keys ($x_2$, $x_2$, $y_1$, $y_2$, $z_1$, $z_2$) from the secret-key storage unit 207, and the parallel-processing control unit 202 reads the torus-compression Cramer-Shoup encryption procedure from the procedure storage unit 206 (Step S22).

Next, the parallel-processing control unit 202 determines processes to be performed in series and processes to be performed in parallel, from the read torus-compression Cramer-Shoup encryption procedure (Step S23), and instructs the decompression processing unit 204 and the decryption processing unit 203 to perform the processes. Specifically, the parallel-processing control unit 202 instructs the decompression processing unit 204 and the decryption processing unit 203 to perform the equations as follows, by determining that the processes described with "&" such as the equation (13-2) & the equation (14-1), the equation (13-3) & the equation (14-2), and the equation (13-4) & the equation (14-3) in the torus-compression Cramer-Shoup encryption procedure are performed in parallel, and other processes are performed in series in the described order.

First, the decompression processing unit 204 obtains the encrypted data $c_1$ and the auxiliary output data $a_4$ by decompressing the compressed data $\gamma_1$ by the equation (13-1), using the compressed encrypted data ($\gamma_4$, $\gamma_3$, $\gamma_2$, $\gamma$, $a_5$) and the final output data (the auxiliary output data) $a_5$ received (Step S24).

Next, in the parallel processing, the decompression processing unit 204 performs the process of decompressing the compressed data $\gamma_2$ and obtaining the encrypted data $c_2$ and the auxiliary output data $a_3$ by the equation (13-2) using the obtained auxiliary output data $a_4$ (Step S26), and the decryption processing unit 203 performs the decryption process of determining whether $c_1$ belongs to the groups G, G^ by the equation (14-1) using the encrypted data $c_1$ obtained at Step S24 (Step S25).

Next, in the parallel processing, the decompression processing unit 204 performs the process of decompressing the compressed data $\gamma_3$ and obtaining the encrypted data $c_3$ and the auxiliary output data $a_2$ by the equation (13-3) using the obtained auxiliary output data $a_3$ (Step S28), and the decryption processing unit 203 performs the decryption process of determining whether $c_2$ belongs to the groups G, G^ by the equation (14-2) using the encrypted data $c_1$ obtained at Step S24 and the encrypted data $c_2$ obtained at Step S26, and obtaining b (Step S27).

Next, in the parallel processing, the decompression processing unit 204 performs the process of decompressing the compressed data $\gamma_4$ and obtaining the encrypted data $c_4$ and the auxiliary output data $a_1$ by the equation (13-4) using the obtained auxiliary output data $a_2$ (Step S30), and the decryption processing unit 203 performs the decryption process of determining whether $c_3$ belongs to the groups G, G^ by the equation (14-3) using the encrypted data $c_1$ obtained at Step S24, the encrypted data $c_2$ obtained at Step S26, and the encrypted data $c_3$ obtained at Step S28, and obtaining the plain data m and the hash value $\nu$ (Step S29).

Next, the decryption processing unit 203 determines as a single process the encrypted data $c_4$ by the equation (14-4), using the encrypted data $c_1$ to $c_4$ and the hash value $\nu$ obtained so far (Step S31). The output unit 205 outputs the obtained plain data m (Step S32).

As explained above, in the procedure of the decompression process and the decryption process in the torus-compression Cramer-Shoup encryption scheme according to the first embodiment, it is determined in advance that the equation (13-2) & the equation (14-1), the equation (13-3) & the equation (14-2), and the equation (13-4) & the equation (14-3) can be performed in parallel. The decompression processing unit 204 and the decryption processing unit 203 perform these processes in parallel.

Therefore, the decryption processing apparatus 200 according to the first embodiment can minimize the memory capacity and can efficiently perform the decompression process and the decryption process.

A second embodiment of the present invention is explained next. In the encryption processing system according to the first embodiment, the decryption processing apparatus 200 performs the parallel execution of the decompression process and the decryption process. However, in the encryption processing system according to the second embodiment, an encryption processing apparatus further performs in parallel the encryption process and the compression process.

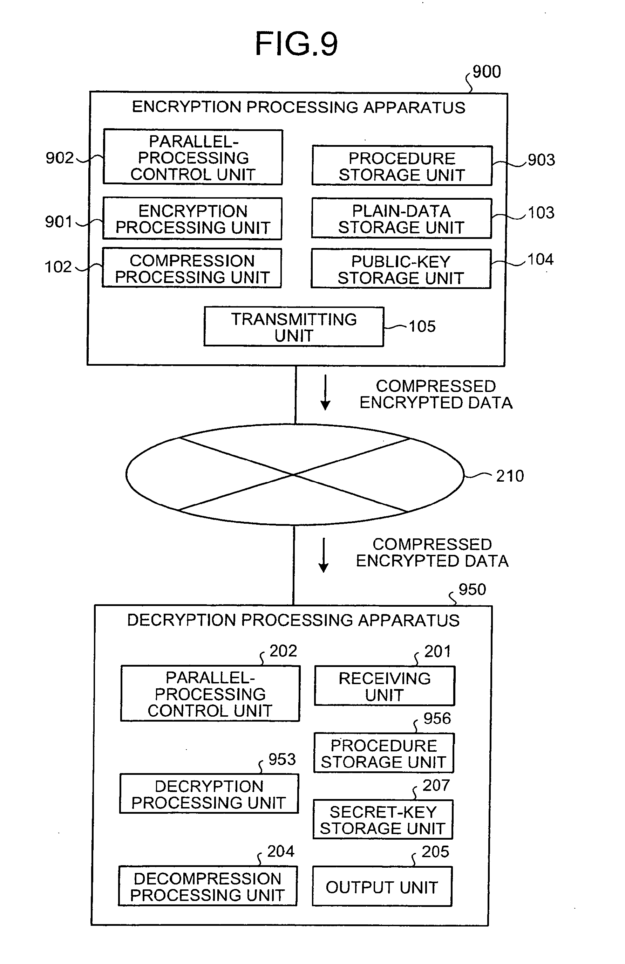

As shown in Fig. 9, the encryption processing system according to the second embodiment has an encryption processing apparatus 900 and a decryption processing apparatus 950 connected to the network 210 such as the Internet.

The encryption processing apparatus 900 is an information processing apparatus such as a PC that performs an encryption process to plain data using a public key, compresses encrypted data obtained by the encryption process, thereby generating compressed encrypted data, and transmits the generated compressed encrypted data to the decryption processing apparatus 200 having a secret key corresponding to the public key.

The decryption processing apparatus 950 is an information processing apparatus such as a PC that receives compressed encrypted data from the encryption processing apparatus 900, decompresses the received compressed encrypted data, and decrypts this data thereby obtaining plain data.

First, the encryption processing apparatus 900 is explained. As shown in Fig. 9, the encryption processing apparatus 900 mainly includes an encryption processing unit 901, the compression processing unit 102, the plain- data storage unit 103, the public-key storage unit 104, the transmitting unit 105, a procedure storage unit 903, and a parallel-processing control unit 902. Functions and configurations of the compression processing unit 102, the plain- data storage unit 103, the public-key storage unit 104, and the transmitting unit 105 are similar to those of the first embodiment.

The procedure storage unit 903 is a storage medium such as a hard-disk drive device and a memory that stores a procedure of a series of the encryption and decryption processes from the encryption process to the compression process, the decompression process, and the decryption process. The encryption and decryption procedure determines an encryption compression protocol in advance, that is, an output order of encrypted data and an order of compression process of plural pieces of encrypted data in the encryption process of the plain data m, and an order of decompression process of plural pieces of compressed data and an order of a decryption process of plural pieces of encrypted data, based on an output order in an encryption process of plural pieces of encrypted data, and an input order of plural pieces of encrypted data and additional input data to a compression map. A detail of the encryption and decryption process is described later.

The encryption processing unit 901 performs an encryption process to the plain data m using a public key, based on a discrete logarithm problem on a finite field, and outputs plural pieces of encrypted data, in a similar manner to that in the first embodiment. In the second embodiment, the encryption processing unit 901 performs the encryption process to the plain data m and outputs plural pieces of encrypted data c, using the hash function H using plural times of exponentiation or multiplication or encrypted data as an input value, like in the first embodiment, and further using the hash function H using the compressed data $\gamma$ obtained by compressing the encrypted data c as an input value, based on the Cramer-Shoup encryption scheme, as an encryption system based on a discrete logarithm problem on the finite field.

The parallel-processing control unit 902 controls to perform the parallel processing so that the encryption processing unit 101 performs the encryption process, and the compression processing unit 102 performs the compression process, following the order of the generation process of plural pieces of encrypted data and the order of the compression process of plural pieces of encrypted data determined by the encryption procedure stored in the procedure storage unit 903. The parallel-processing control unit 902 also causes the compression processing unit 102 to compress the pieces of encrypted data output by the encryption processing unit 901, by controlling the execution of the series process of the encryption process and the compression process. That is, the parallel-processing control unit 902 references the encryption procedure, determines processes to be performed in parallel and processes to be performed in series among the encryption process and the compression process, and transmits an execution instruction to the encryption processing unit 901 and the compression processing unit 102 based on a result of the determination.

Details of the parallel execution of the encryption process performed by the encryption processing unit 901 and the compression process performed by the compression processing unit 102 are described later.

The decryption processing apparatus 950 is explained next. As shown in Fig. 9, the decryption processing apparatus 950 mainly includes the receiving unit 201, a decryption processing unit 953, the decompression processing unit 204, the parallel-processing control unit 202, the output unit 205, the secret-key storage unit 207, and a procedure storage unit 956. The receiving unit 201, the decompression processing unit 204, the output unit 205, the parallel-processing control unit 202, and the secret-key storage unit 207 have similar functions and configurations as those in the first embodiment.

Like in the first embodiment, the decryption processing unit 953 performs a decryption process according to the Cramer-Shoup encryption scheme to each of the pieces of encrypted data decompressed by the decompression processing unit 204, based on a discrete logarithm problem on a finite field, using a secret key stored in the secret-key storage unit 207, and outputs the plain data m. In the second embodiment, the decryption processing unit 953 performs a decryption process to plural pieces of the encrypted data c, and obtains the plain data m, using the hash function H using plural times of exponentiation or multiplication or encrypted data c as an input value, like in the first embodiment, and also using the hash function H using the compressed data $\gamma$ as an input data.

The procedure storage unit 956 is a storage medium such as a hard-disk drive device and a memory that stores an encryption and decryption procedure. The encryption and decryption procedure is the same as the encryption and decryption procedure stored in the procedure storage unit 903 of the encryption processing apparatus 900. Alternatively, the encryption processing apparatus 900 can be configured such that the procedure storage unit 903 stores only an encryption procedure of the encryption process and the compression process, and the decryption processing apparatus 950 can be configured such that the procedure storage unit 956 stores only a decryption procedure of the decompression process and the decryption process.

Next, the encryption and decryption procedure stored in the procedure storage units 903 and 956 according to the second embodiment is explained. In the second embodiment, the Cramer-Shoup encryption scheme is employed for the encryption system, and the torus-compression Cramer-Shoup encryption scheme is employed for the compression and encryption system, like in the first embodiment.

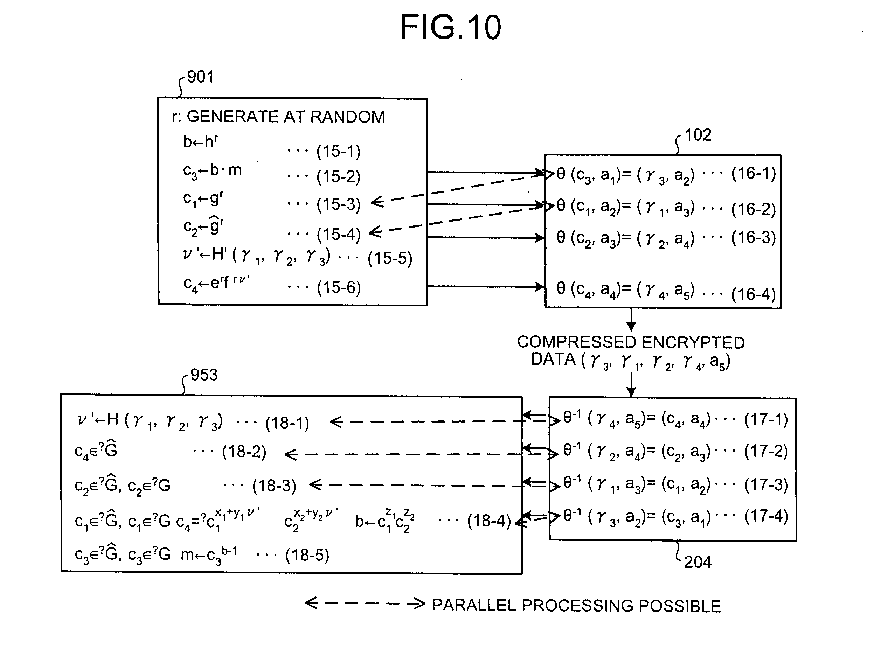

According to the encryption and decryption procedure of the second embodiment, the encryption processing apparatus 900 can perform the encryption process and the compression process in parallel. Fig. 10 depicts a procedure of the encryption process, the compression process, the decompression process, and the decryption process in the torus-compression Cramer-Shoup encryption scheme (the torus-compression Cramer-Shoup encryption procedure) according to the second embodiment.

In the encryption processing apparatus 900 according to the second embodiment, the encryption processing unit 901 performs the encryption process in the order of equations (15-1), (15-2), (15-3), (15-4), and obtains the encrypted data in the order of $c_3$, $c_1$, $c_2$. The compression processing unit 102 obtains the compressed data $\gamma_3$, $\gamma_1$, $\gamma_2$ by sequentially using equations (16-1), (16-2), (16-3) of the compression process. Thereafter, the encryption processing unit 901 inputs the obtained compressed data $\gamma_3$, $\gamma_1$, $\gamma_2$ to the hash function H to obtain v' by an equation (15-5), and obtains the encrypted data $c_4$ by an equation (15-6). The compression processing unit 102 obtains the compressed data $\gamma_4$ using the encrypted data $c_4$ obtained by the equation (15-6), by an equation (16-4). That is, in the second embodiment, the encrypted data are obtained in the order of $c_3$, $c_1$, $c_2$. The encrypted data are compressed in the order of $c_3$, $c_1$, $c_2$ to calculate the compressed data $\gamma_3$, $\gamma_1$, $\gamma_2$. For the hash value necessary to calculate the encrypted data $c_4$, the hash value of the compressed data $\gamma_3$, $\gamma_1$, $\gamma_2$ is obtained, by not obtaining the hash value of the encrypted data $c_1$, $c_2$, $c_3$, by the function H of the equation (15-5).

Therefore, the equations (15-3) and the equation (16-1), and the equation (15-4) and the equation (16-2) can be performed in parallel.

Consequently, it is described as the torus-compression Cramer-Shoup encryption procedure that the encryption and the decryption processes follow the procedure of the equation (15-1), the equation (15-2), the equation (15-3) & the equation (16-1), the equation (15-4) & the equation (16-2), the equation (16-3), the equation (15-5), the equation (15-6), and the equation (16-4).

Therefore, the parallel-processing control unit 902 of the encryption processing apparatus 900 according to the second embodiment reads the torus-compression Cramer-Shoup encryption procedure stored in the procedure storage unit 903, and controls the encryption processing unit 901 and the compression processing unit 102 to perform the parallel processing of the equation (15-3) and the equation (16-1), and the parallel processing of the equation (15-4) and the equation (16-2), based on the above description of the procedure.

In the second embodiment, the procedure of calculating the encrypted data is $c_3$, $c_1$, $c_2$, $c_4$. However, when $c_4$ is calculated after calculating $c_1$, $c_2$, $c_3$. and also when the encrypted data after obtaining the compressed data are used sequentially, the calculation order of $c_1$, $c_2$, $c_3$ is not limited to this.

The additional input data $a_1$ and the auxiliary output data $a_2$, $a_3$, $a_4$, $a_5$ are used in a similar manner to that in the first embodiment.

The compressed encrypted data ($\gamma$, $\gamma_1$, $\gamma_2$, $\gamma_4$, $a_5$) configured by the compressed data $\gamma_3$, $\gamma_1$, $\gamma_2$, $\gamma_4$, and auxiliary output data $a_5$ as final output data are transmitted to the decryption processing apparatus 950.

The decompression processing unit 204 of the decryption processing apparatus 950 performs the decompression process in the order of the decompression process of the compressed data $\gamma_4$ by an equation (17-1), the decompression process of the compressed data $\gamma_2$ by an equation (17-2), the decompression process of the compressed data $\gamma_1$ by an equation (17-3), and the decompression process of the compressed data $\gamma_3$ by an equation (17-4). More specifically, the decompression processing unit 204 inputs the compressed data $\gamma_3$ of the compressed encrypted data ($\gamma_3$, $\gamma_1$, $\gamma_2$, $\gamma_4$, $a_5$) and the final output data (the auxiliary output data) $a_5$ to the decompression map $\theta^{-1}$, and first obtains the encrypted data $c_4$ and the auxiliary output data $a_4$, by the equation (17-1), and then inputs the auxiliary output data

$a_4$ and the compressed data $\gamma_2$ obtained, to the decompression map $\theta^{-1}$, and obtains the encrypted data $c_2$ and the additional input data $a_3$, by the equation (17-2). Further, the decompression processing unit 204 inputs the auxiliary output data $a_3$ and the compressed data $\gamma_1$ obtained, to the decompression map $\theta^{-1}$, and obtains the encrypted data $c_1$ and the additional input data $a_2$, by the equation (17-3), and next inputs the auxiliary output data $a_2$ and the compressed data $\gamma_3$ obtained, to the decompression map $\theta^{-1}$, and obtains the encrypted data $c_3$ and the additional input data $a_1$, by the equation (17-4). That is, the decompression process is performed in the order of the calculation of the encrypted data $c_4$, the calculation of the encrypted data $c_2$, the calculation of the encrypted data $c_1$, and the calculation of the encrypted data $c_3$.

The decryption processing unit 953 performs the decryption process by first performing the process of an equation (18-1) to obtain v' by inputting the compressed data $\gamma_1$, $\gamma_2$, $\gamma_3$ to the hash function H, and then using the encrypted data calculated by the decompression process, in the calculated order, that is, in the order of an equation (18-2) using the encrypted data $c_4$, an equation (18-3) using the encrypted data $c_2$, an equation (18-4) using the encrypted data $c_1$ and $c_2$, and an equation (18-5) using the encrypted data $c_3$.

Not the encrypted data but the compressed data $\gamma_1$, $\gamma_2$, $\gamma_3$ before the decompression are input to the hash function H, and these can be obtained from the compressed encrypted data ($\gamma_3$, $\gamma_1$, $\gamma_2$, $\gamma_4$, $a_5$). Therefore, the equation (18-1) in the decryption process and the equation (17-1) in the decompression process can be performed in parallel. After the encrypted data $c_4$ is obtained by the equation (17-1) in the decompression process, the equation (17-2) in the decompression process and the equation (18-2) in the decryption process can be performed in parallel. Similarly, after the encrypted data $c_2$ is obtained by the equation (17-2), the equation (17-3) in the decompression process and the equation (18-3) in the decryption process can be performed in parallel. Similarly, after the encrypted data data $c_1$ is obtained by the equation (17-3), the equation (17-4) in the decompression process and the equation (18-4) in the decryption process can be performed in parallel.

Consequently, it is described as the torus-compression Cramer-Shoup encryption procedure that the encryption and the decryption processes follow the procedure of the equation (17-1) & the equation (18-1), the equation (17-2) & the equation (18-2), the equation (17-3), the equation (18-3), the equation (17-4) & the equation (18-4), and the equation (18-5).

Therefore, the parallel-processing control unit 202 of the decryption processing apparatus 950 according to the second embodiment reads the torus-compression Cramer-Shoup encryption procedure stored in the procedure storage unit 956, and controls the decompression processing unit 204 and the decryption processing unit 953 to perform the parallel processing of the equation (17-1) & the equation (18-1), the parallel processing of the equation (17-2) & the equation (18-2), the parallel processing of the equation (17-3), the equation (18-3), and the parallel processing of the equation (17-4) & the equation (18-4), based on the above description of the procedure.

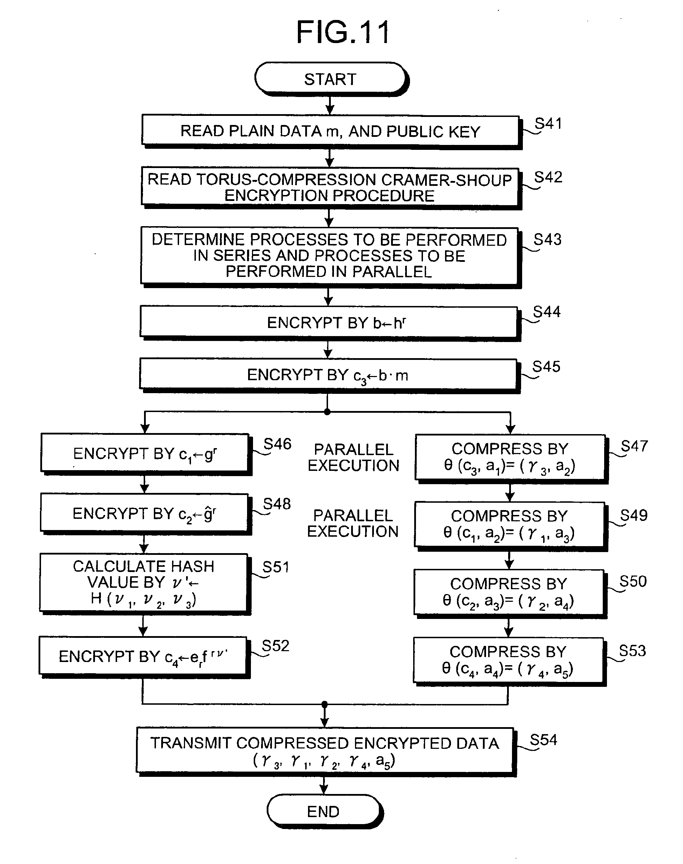

The encryption process and the compression process based on the torus-compression Cramer-Shoup encryption procedure according to the second embodiment are explained next with reference to Fig. 11.

First, the encryption processing unit 901 reads the plain data m from the plain- data storage unit 103, and reads a public key from the public-key storage unit 104 (Step S41). The parallel-processing control unit 902 reads the torus-compression Cramer-Shoup encryption procedure from the procedure storage unit 903 (Step S42).

Next, the parallel-processing control unit 902 determines processes to be performed in series and processes to be performed in parallel, from the read torus-compression Cramer-Shoup encryption procedure (Step S43), and instructs the encryption processing unit 901 and the compression processing unit 102 to perform the processes. Specifically, the parallel-processing control unit 902 instructs the encryption processing unit 901 and the compression processing unit 102 to perform the equations as follows, by determining that the processes described with "&" such as the equation (15-3) & the equation (16-1), the equation (15-4) & the equation (16-2), and the equation (15-6) & the equation (16-3) in the torus-compression Cramer-Shoup encryption procedure are performed in parallel, and other processes are performed in series in the described order.

First, the encryption processing unit 901 performs the encryption process by the equation (15-1) (Step S44), and next obtains the encrypted data $c_3$ by performing the encryption process by the equation (15-2) (Step S45).

Next, in the parallel processing, the encryption processing unit 901 calculates the encrypted data $c_1$ by the equation (15-3) (Step S46), and the compression processing unit 102 calculates the compressed data $\gamma_2$ and the auxiliary output data $a_2$ of the encrypted data $c_3$ by the equation (16-1) (Step S47).

Next, in the parallel processing, the encryption processing unit 901 calculates the encrypted data $c_2$ by the equation (15-4) (Step S48), and the compression processing unit 102 calculates the compressed data $\gamma_1$ and the auxiliary output data $a_3$ of the encrypted data $c_1$ by the equation (16-2) (Step S49).

Next, the compression processing unit 102 calculates the compressed data $\gamma_2$ and the auxiliary output data $a_4$ from the calculated encrypted data $c_2$, by the equation (16-3) (Step S50). Next, the encryption processing unit 901 calculates the hash value v' of the compressed data $\gamma_1$, $\gamma_2$, $\gamma_3$ calculated so far, by the equation (15-5) (Step S51). Thereafter, the encryption processing unit 901 calculates the encrypted data $c_4$ using this hash value v' (Step S52).

The compression processing unit 102 calculates the compressed data $\gamma_4$ and the auxiliary output data $a_5$ of

the encrypted data $c_4$ by the equation (16-4) (Step S53).

The transmitting unit 105 generates the compressed encrypted data ($\gamma_3$, $\gamma_1$, $\gamma_2$, $\gamma_4$, $a_5$) from the compressed data $\gamma_3$, $\gamma_1$, $\gamma_2$, $\gamma_4$ and the auxiliary output data $a_5$ as the final output data so far calculated, and transmits the generated compressed encrypted data ($\gamma_3$, $\gamma_1$, $\gamma_2$, $\gamma_4$, $a_5$) to the decryption processing apparatus 950 (Step S54).

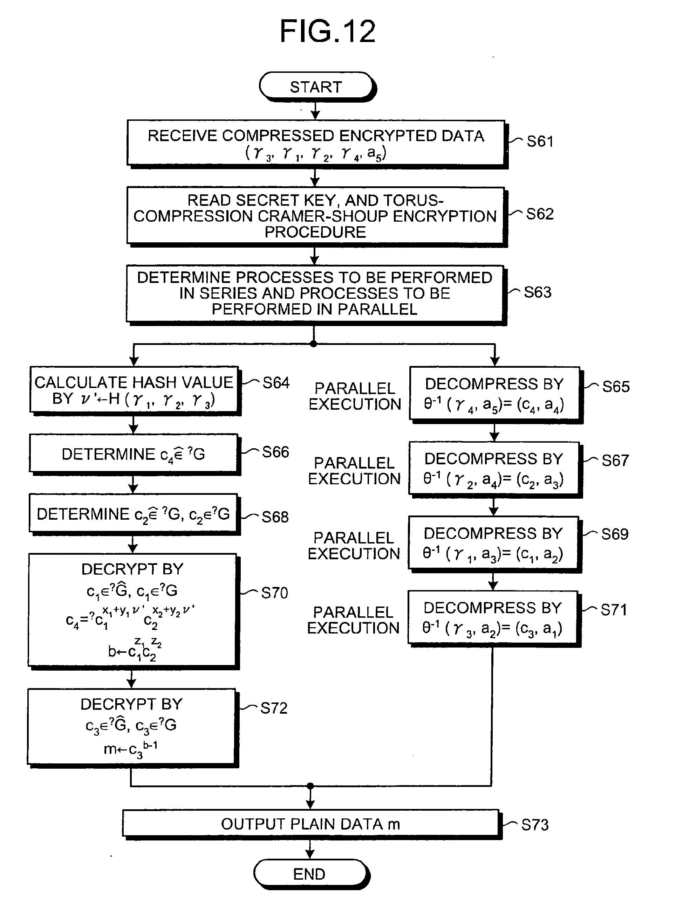

The decompression process and the decryption process based on the torus-compression Cramer-Shoup encryption procedure according to the second embodiment are explained with reference to Fig. 12.

First, the receiving unit 201 receives the compressed encrypted data ($\gamma_3$, $\gamma_1$, $\gamma_2$, $\gamma_4$, $a_5$) from the encryption processing apparatus 100 (Step S61). The decryption processing unit 953 reads the secret keys ($x_1$, $x_2$, $y_1$, $y_2$, $z_1$, $z_2$) from the secret-key storage unit 207, and the parallel-processing control unit 202 reads the torus-compression Cramer-Shoup encryption procedure from the procedure storage unit 956 (Step S62).

Next, the parallel-processing control unit 202 determines processes to be performed in series and processes to be performed in parallel, from the read torus-compression Cramer-Shoup encryption procedure (Step S63), and instructs the decompression processing unit 204 and the decryption processing unit 953 to perform the processes. Specifically, the parallel-processing control unit 202 instructs the decompression processing unit 204 and the decryption processing unit 203 to perform the equations as follows, by determining that the processes described with "&" such as the equation (17-1) & the equation (18-1), the equation (17-2) & the equation (18-2), the equation (17-3) & the equation (18-3), and the equation (17-4) & the equation (18-4) in the torus-compression Cramer-Shoup encryption procedure are performed in parallel, and other processes are performed in series in the described order.

First, in the parallel processing, the decompression processing unit 204 obtains the encrypted data $c_4$ and the auxiliary output data $a_4$ by decompressing the compressed data $\gamma_4$ of the compressed encrypted data ($\gamma_3$, $\gamma_1$, $\gamma_2$, $\gamma_4$, $a_5$) by the equation (17-1), using the final output data (the auxiliary output data) $a_5$ (Step S65), and the decryption processing unit 953 obtains the hash value v' of the compressed data $\gamma_1$, $\gamma_2$, $\gamma_3$ by the equation (18-1) (Step S64).

Next, in the parallel processing, the decompression processing unit 204 performs the process of decompressing the compressed data $\gamma_2$ and obtaining the encrypted data $c_2$ and the auxiliary output data $a_3$ by the equation (17-2) using the auxiliary output data $a_4$ (Step S67), and the decryption processing unit 953 determines whether the encrypted data $c_4$ obtained at Step S65 belongs to the group $G^\wedge$ by the equation (18-2) (Step S66).

Next, in the parallel processing, the decompression processing unit 204 performs the process of decompressing the compressed data $\gamma_1$ and obtaining the encrypted data $c_1$ and the auxiliary output data $a_2$ by the equation (17-3) using the auxiliary output data $a_3$ (Step S69), and the decryption processing unit 953 determines whether the encrypted data $c_2$ obtained at Step S67 belongs to the groups $G$, $G^\wedge$ by the equation (18-3) (Step S68).

Next, in the parallel processing, the decompression processing unit 204 performs the process of decompressing the compressed data $\gamma_3$ and obtaining the encrypted data $c_3$ and the auxiliary output data $a_1$ by the equation (17-4) using the auxiliary output data $a_2$ (Step S71), and the decryption processing unit 953 performs the process of using the encrypted data $c_1$, $c_2$, $c_3$, $c_4$ obtained so far, by the equation (18-4) (Step S70).

The decryption processing unit 953 determines whether the encrypted data $c_3$ obtained at Step S71 belongs to the groups $G$, $G^\wedge$ by the equation (18-5), and obtains the plain data m using the encrypted data $c_3$ (Step S72). The output unit 205 outputs the obtained plain data m (Step S73).

As explained above, in the torus-compression Cramer-Shoup encryption procedure according to the second embodiment, the encryption process and the decryption process are performed by obtaining the hash value of the compressed data $\gamma_1$, $\gamma_2$, $\gamma_3$, without using the hash value of the encrypted data by the hash function H. Therefore, the parallel execution of the encryption process and the compression process, and the parallel execution of the decompression process and the decryption process can be achieved. Therefore, according to the encryption processing system of the second embodiment, the memory capacity can be minimized, and the encryption process and the compression process, and the decompression process and the decryption process can be performed efficiently.

As a modification of the second embodiment, the parallel execution of the encryption process and the compression process, and the parallel processing of the decompression process and the decryption process can be also performed, by determining the encryption and decryption procedure as follows.

In the present modification, the Cramer-Shoup encryption scheme is used for the encryption system, and the torus-compression Cramer-Shoup encryption scheme is employed for the compressed encryption system, similarly to the second embodiment. However, in the present modification, as a part of the compression process, the encrypted data is compressed using a compression map $\rho$ not using additional input data and not outputting the auxiliary output data. As a part of the decompression process, the compressed data is decompressed by an decompression map $\rho^{-1}$ not using the auxiliary output data and not outputting this data.

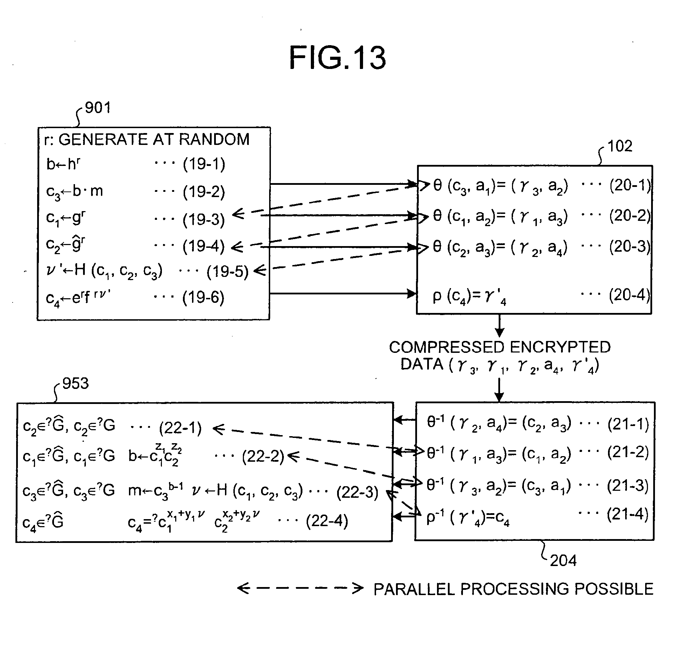

Fig. 13 depicts a procedure of the encryption process, the compression process, the decompression process, and the decryption process in the torus-compression Cramer-Shoup encryption scheme (the torus-compression Cramer-Shoup encryption procedure) according to the modification.

In the encryption processing apparatus 900 according to the modification, the encryption processing unit 901 performs the encryption process in the order of equations (19-1), (19-2), (19-3), (19-4), and obtains the encrypted data in the order of $c_3$, $c_1$, $c_2$. The compression processing unit 102 obtains the compressed data $\gamma_3$, $\gamma_1$, $\gamma_2$ by sequentially using equations (20-1), (20-2), (20-3) of the compression process, using the encrypted data $c_1$, $c_2$, $c_3$. Thereafter, the encryption processing unit 901 inputs the obtained encrypted data $c_1$, $c_2$, $c_3$ to the hash function H, and obtains the hash value $v'$ by the equation (19-5), and obtains the encrypted data $c_4$ by the equation (19-6). The compression processing unit 102 obtains the compressed data $\gamma_4$ using the encrypted data $c_4$ obtained by the equation (15-6), by an equation (16-4). The compression processing unit 102 obtains compressed data $\gamma_4'$ of the encrypted data $c_4$ using the compression map $\rho$ not using the additional input data and not outputting the auxiliary output data, by the equation (20-4).

That is, in the second embodiment, the encrypted data are obtained in the order of $c_3$, $c_1$, $c_2$. The encrypted data are compressed in the order of $c_3$, $c_1$, $c_2$ to calculate the compressed data $\gamma_3$, $\gamma_1$, $\gamma_2$. The hash value $v'$ necessary to calculate the encrypted data $c_4$ is obtained by inputting the encrypted data $c_1$, $c_2$, $c_3$ to the hash function H of the equation (19-5). In the compression process of the encrypted data $c_4$, the additional input data is not used.

Therefore, the equations (19-3) and the equation (20-1), the equation (19-4) and the equation (20-2), and the equation (19-5) and the equation (20-3) can be performed in parallel.

Accordingly, it is described as the torus-compression Cramer-Shoup encryption procedure that the encryption and the decryption processes follow the procedure of the equation (19-1), the equation (19-2), the equation (19-3) & the equation (20-1), the equation (19-4) & the equation (20-2), the equation (19-5) & the equation (20-3), the equation (19-6), and the equation (20-4).

Consequently, the parallel-processing control unit 902 of the encryption processing apparatus 900 according to the second embodiment reads the torus-compression Cramer-Shoup encryption procedure stored in the procedure storage unit 903, and controls the encryption processing unit 901 and the compression processing unit 102 to perform the parallel processing of the equation (19-3) and the equation (20-1), the parallel processing of the equation (19-4) and the equation (20-2), and the parallel processing of the equation (19-5) and the equation (20-3), based on the above description of the procedure.

In the second embodiment, the procedure of calculating the encrypted data is $c_3$, $c_1$, $c_2$, $c_4$. However, when $c_4$ is calculated after calculating $c_1$, $c_2$, $c_3$, and also when the compressed data are calculated by sequentially using the obtained encrypted data, the calculation order of $c_1$, $c_2$, $c_3$ is not limited to this.

The additional input data $a_1$ and the auxiliary output data $a_2$, $a_3$ are used in a similar manner to that in the second embodiment.

Compressed encrypted data ($\gamma_3$, $\gamma_1$, $\gamma_2$, $a_4$, $\gamma_4'$) configured by compressed data $\gamma_3$, $\gamma_1$, $\gamma_2$, $\gamma_4'$, and the auxiliary output data $a_4$ are then transmitted to the decryption processing apparatus 950.

The decompression processing unit 204 of the decryption processing apparatus 950 performs the decompression process in the order of the decompression process of the compressed data $\gamma_2$ by an equation (21-1), the decompression process of the compressed data $\gamma_1$ by an equation (21-2), the decompression process of the compressed data $\gamma_3$ by an equation (21-3), and the decompression process of the compressed data $\gamma_4'$ by an equation (21-4).

More specifically, the decompression processing unit 204 inputs the compressed data $\gamma_2$ of the compressed encrypted data ($\gamma_3$, $\gamma_1$, $\gamma_2$, $a_4$, $\gamma_4'$) and the final output data (the auxiliary output data) $a_4$ to the decompression map $\theta^{-1}$, and first obtains the encrypted data $c_2$ and the auxiliary output data $a_3$, by the equation (21-1), and then inputs the auxiliary output data $a_3$ and the compressed data $\gamma_1$ obtained, to the decompression map $\theta^{-1}$, and obtains the encrypted data $c_1$ and the auxiliary output data $a_2$, by the equation (21-2). Further, the decompression processing unit 204 inputs the auxiliary output data $a_2$ and the compressed data $\gamma_3$ obtained, to the decompression map $\theta^{-1}$, and obtains the encrypted data $c_3$ and the additional input data $a_1$, by the equation (21-3). The decompression processing unit 204 inputs $\gamma_4'$ to the decompression map $\theta^{-1}$, and obtains the encrypted data $c_4$ by the equation (21-4). That is, the decompression process is performed in the order of the calculation of the encrypted data $c_2$, the calculation of the encrypted data $c_1$, the calculation of the encrypted data $c_3$, and the calculation of the encrypted data $c_4$.

The decryption processing unit 953 performs the decryption process in the order of an equation (22-1) using the encrypted data $c_2$, an equation (22-2) using the encrypted data $c_1$, $c_2$, an equation (22-3) of obtaining the hash value $v$ of the encrypted data $c_1$, $c_2$, $c_3$, and an equation (22-4) using the hash value $v$ and the encrypted data $c_1$, $c_2$.

After the encrypted data $c_2$ is obtained by the equation (21-1) of the decompression process, the equation (21-2) of the decompression process and the equation (22-1) of the decryption process can be performed in parallel. Similarly, after the encrypted data $c_1$ is obtained by the equation (21-2) of the decompression process, the equation (21-3) of the decompression process and the equation (22-2) of the decryption process can be performed in parallel. Similarly, after the encrypted data $c_3$ is obtained by the equation (21-3) of the decompression process, the equation (21-4) of the decompression process and the equation (22-3) of the decryption process can be performed in parallel.

Accordingly, it is described as the torus-compression Cramer-Shoup encryption procedure that the decompression process and the decryption process according to the second embodiment follow the procedure of the equation of the equation (21-1), the equation (21-2) & the equation (22-1), the equation (21-3) & the equation (22-2), the equation (21-4) & the equation (22-3), and the equation (23-4).

Therefore, the parallel-processing control unit 202 of the decryption processing apparatus 950 according to the second embodiment reads the torus-compression Cramer-Shoup encryption procedure stored in the procedure storage unit 956, and controls the decompression processing unit 204 and the decryption processing unit 953 to perform the parallel execution of the equation (21-2) & the equation (22-1), the parallel execution of the equation (21-3) & the equation (22-2), and the parallel execution of the equation (21-4) & the equation (22-3), based on the above description of the procedure.

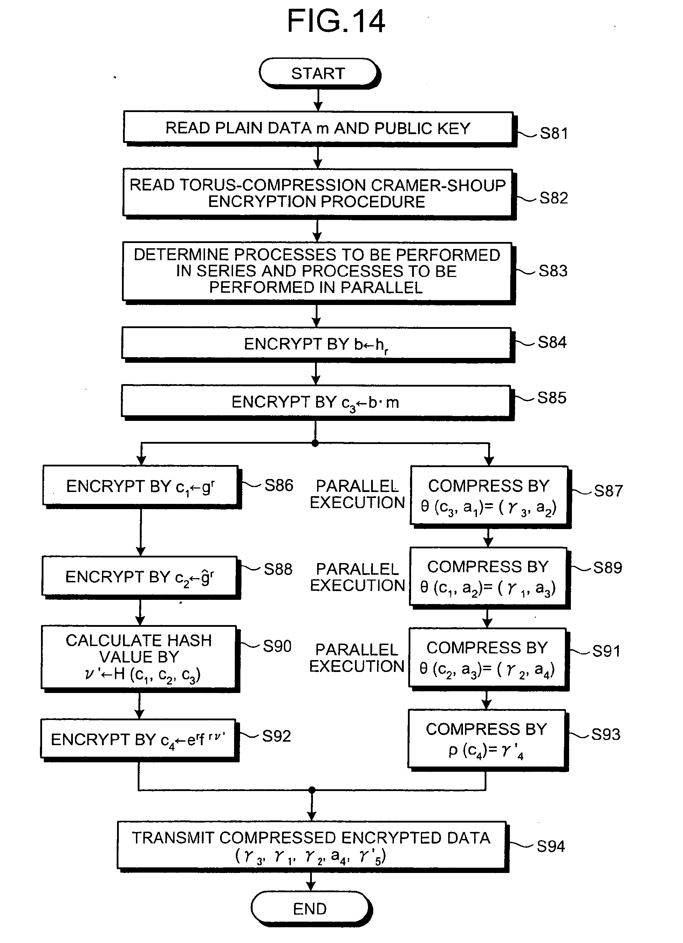

The encryption process and the compression process based on the torus-compression Cramer-Shoup encryption procedure according to the modification are explained next with reference to Fig. 14.

First, the encryption processing unit 901 reads the plain data m from the plain- data storage unit 103, and reads a public key from the public-key storage unit 104 (Step S81). The parallel-processing control unit 902 reads the torus-compression Cramer-Shoup encryption procedure from the procedure storage unit 903 (Step S82).

Next, the parallel-processing control unit 902 determines processes to be performed in series and processes to be performed in parallel, from the read torus-compression Cramer-Shoup encryption procedure (Step S83), and instructs the encryption processing unit 901 and the compression processing unit 102 to perform the processes. Specifically, the parallel-processing control unit 902 instructs the encryption processing unit 901 and the compression processing unit 102 to perform the equations as follows, by determining that the processes described with "&" such as the equation (19-3) & the equation (20-1), the equation (19-4) & the equation (20-2), and the equation (19-5) & the equation (20-3) in the torus-compression Cramer-Shoup encryption procedure are performed in parallel (Step S83), and other processes are performed in series in the described order.

First, the encryption processing unit 901 performs the encryption process by the equation (19-1) (Step S84), and next obtains the encrypted data $c_3$ by performing the encryption process by the equation (19-2) (Step S85).

Next, in the parallel processing, the encryption processing unit 901 calculates the encrypted data $c_1$ by the equation (19-3) (Step S86), and the compression processing unit 102 calculates the compressed data $\gamma_2$ and the auxiliary output data $a_2$ of the encrypted data $c_3$ by the equation (20-1) (Step S87).

Next, in the parallel processing, the encryption processing unit 901 calculates the encrypted data $c_2$ by the equation (19-4) (Step S88), and the compression processing unit 102 calculates the compressed data $\gamma_1$ and the auxiliary output data $a_3$ of the encrypted data $c_1$ by the equation (20-2) (Step S89).

Next, in the parallel processing, the encryption processing unit 901 calculates the hash value $v$ of the encrypted data $c_1$, $c_2$, $c_3$ by the equation (19-5) (Step S90), and the compression processing unit 102 calculates the compressed data $\gamma_2$ and the auxiliary output data $a_4$ of the encrypted data $c_2$, by the equation (20-3) (Step S91).

Thereafter, the encryption processing unit 901 calculates the encrypted data $c_4$ using this hash value $v$ (Step S92). The compression processing unit 102 calculates the compressed data $\gamma_4$' by compressing the calculated encrypted data $c_4$ by the compression map $\rho$ (Step S93).

The transmitting unit 105 generates the compressed encrypted data $(\gamma_3, \gamma_1, \gamma_2, a_4, \gamma_4')$ from the compressed data $\gamma_3, \gamma_1, \gamma, \gamma_4$ and the auxiliary output data $a_4$, and transmits the generated compressed encrypted data $(\gamma_3, \gamma_1, \gamma_2, a_4, \gamma_4')$ to the decryption processing apparatus 950 (Step S94).

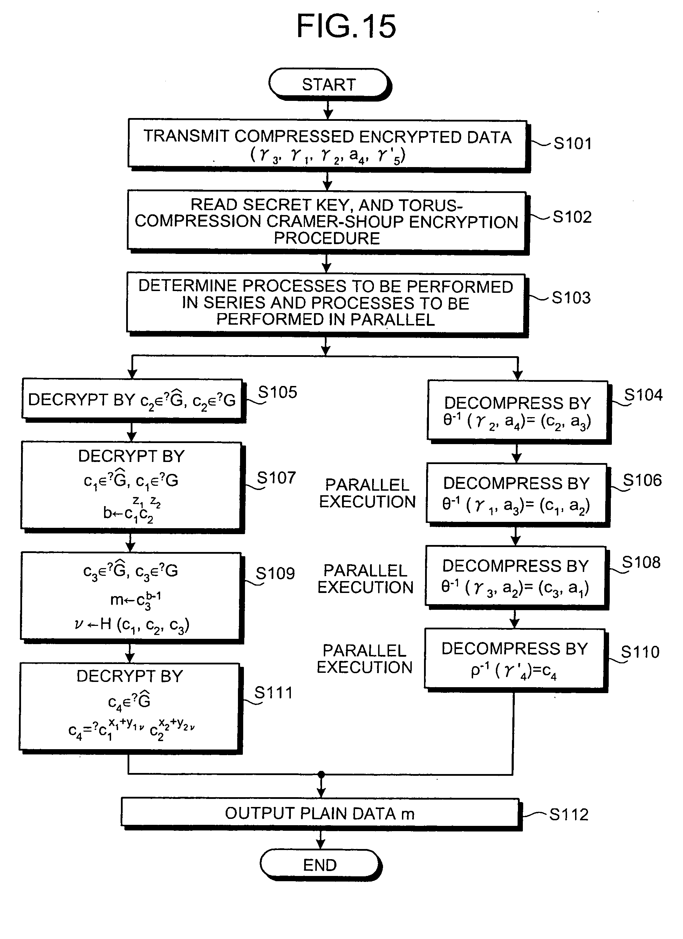

The decompression process and the decryption process based on the torus-compression Cramer-Shoup encryption procedure according to the second embodiment are explained next with reference to Fig. 15.

First, the receiving unit 201 receives the compressed encrypted data $(\gamma_3, \gamma_1, \gamma_2, a_4, \gamma_4')$ from the encryption processing apparatus 100 (Step S101). The decryption processing unit 953 reads the secret keys $(x_1, x_2, y_1, y_2, z_1, z_2)$ from the secret-key storage unit 207, and the parallel-processing control unit 202 reads the torus-compression Cramer-Shoup encryption procedure from the procedure storage unit 956 (Step S102).

Next, the parallel-processing control unit 202 determines processes to be performed in series and processes to be performed in parallel, from the read torus-compression Cramer-Shoup encryption procedure (Step S103), and instructs the decompression processing unit 204 and the decryption processing unit 953 to perform the processes. Specifically, the parallel-processing control unit 202 instructs the decompression processing unit 204 and the decryption processing unit 203 to perform the equations as follows by determining that the processes described with "&" such as the equation (21-2) & the equation (22-1), the equation (21-3) & the equation (22-2), and the equation (21-4) & the equation (22-3) in the torus-compression Cramer-Shoup encryption procedure are performed in parallel, and other processes are performed in series in the described order.

First, in the parallel processing, the decompression processing unit 204 obtains the encrypted data $c_2$ and the auxiliary output data $a_3$ by decompressing the compressed data $\gamma_2$ of the compressed encrypted data $(\gamma_3, \gamma_1, \gamma_2, a_4, \gamma_4')$ by the equation (21-1), using the auxiliary output data $a_4$ (Step S104). Next, in the parallel processing, the decompression processing unit 204 performs the process of decompressing the compressed data $\gamma_1$ and obtaining the encrypted data $c_1$ and the auxiliary output data $a_2$ by the equation (21-2) using the auxiliary output data $a_3$, (Step S106), and the decryption processing unit 953 determines whether the encrypted data $c_2$ obtained at Step S104 belongs to the groups G, G^ by the equation (22-2) (Step S105).

Next, in the parallel processing, the decompression processing unit 204 performs the process of decompressing the compressed data $\gamma_3$ and obtaining the encrypted data $c_3$ and the auxiliary output data $a_1$ by the equation (21-3) using the auxiliary output data $a_2$ (Step S108), and the decryption processing unit 953 determines whether the encrypted data $c_3$ obtained at Step S108 belongs to the groups G, G^, obtains the plain data m, and obtains the hash value $\nu$ of the encrypted data $c_1$, $c_2$, $c_3$ so far obtained, by an equation (23-3) (Step S109).

The decryption processing unit 953 then determines the encrypted data $c_4$ by an equation (23-4) using the hash data $\nu$ and the encrypted data $c_1$, $c_2$ (Step S111). The output unit 205 outputs the plain data m (Step S112).

As explained above, in the torus-compression Cramer-Shoup encryption procedure according to the modification, the parallel execution of the encryption process and the compression process, and the parallel execution of the decompression process and the decryption process can be achieved, based on the procedure of using the compression map $\rho$ and the decompression map $\rho^{-1}$ not using the additional input data or the auxiliary output data, and using the encrypted data c. Therefore, according to the encryption processing system of the modification, the memory capacity can be minimized, and the encryption process and the compression process, and the decompression process and the decryption process can be performed efficiently.

The encryption processing apparatuses 100 and 900, and the decryption processing apparatuses 200 and 950 according to the first and second embodiments have a hardware configuration including a control device such as a central processing unit (CPU), a memory device such as a read only memory (ROM) and a random access memory (RAM), an external storage device such as an HDD, and a compact disk (CD) drive unit, a display device such as a display unit, and an input device such as a keyboard and a mouse, and use a normal computer.

An encryption compression program executed by the encryption processing apparatuses 100 and 900, and an decompression and decryption program executed by the decryption processing apparatuses 200 and 950 according to the first and second embodiments are recorded into a computer-readable recording medium such as a CD-ROM, a flexible disk (FD), a CD recordable (CD-R), a digital versatile disk (DVD), in a file of an installable format or an executable format, and these programs are provided as computer program products having the recording medium stored therein.

The encryption compression program executed by the encryption processing apparatuses 100 and 900, and the decompression and decryption program executed by the decryption processing apparatuses 200 and 950 according to the first and second embodiments can be provided by being incorporated into a ROM or the like in advance.

The encryption compression program executed by the encryption processing apparatuses 100 and 900, and the decompression and decryption program executed by the decryption processing apparatuses 200 and 950 according to the first and second embodiments have module configurations including the above-described units (the parallel-processing control unit, the encryption processing unit, the compression processing unit, the transmitting unit, the receiving unit, the decompression processing unit, and the decryption processing unit). As actual hardware, the CPU (processor) reads the encryption compression program and the decompression and decryption program from the above recording medium, and executes these programs, thereby loading each unit onto the main storage device, and generating the parallel-processing control unit, the encryption processing unit, the compression processing unit, the transmitting unit, the receiving unit, the decompression processing unit, and the decryption processing unit, onto the main storage device.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

**Claims**

1.  A decryption processing apparatus (200) comprising:

    a receiving unit (201) that receives compressed encrypted data from an encryption processing apparatus via a network (210), the encryption processing apparatus performing an encryption process to plain data using a public key and output a plurality of pieces of encrypted data, and a compression process to perform a compression map to each of the pieces of the encrypted data to output compressed encrypted data obtained by compressing the encrypted data and auxiliary output data as an intermediate output from the encrypted data and additional input data, thereby outputting the compressed encrypted data including the pieces of the compressed data and final output data finally output as the auxiliary output data;
    a storage unit (206) that stores a decryption procedure which determines in advance an order of a decompression process of the pieces of the compressed data and an order of a decryption process of the pieces of the encrypted data, based on an output order of the pieces of the encrypted data in the encryption process and an input order of the pieces of the encrypted data and the additional input data to the compression map;
    a decompression processing unit (204) that performs a decompression map to the pieces of the compressed data included in the compressed encrypted data, thereby obtaining the pieces of the encrypted data having each of the pieces of the compressed data decompressed, the decompression map being a process of inputting the compressed data and either the final output data or the auxiliary output data and being a process of outputting the encrypted data and the auxiliary output data;

a decryption processing unit (203) that performs a decryption process to each of the pieces of encrypted data, using a secret key corresponding to the public key, thereby obtaining the plain data; and

a control unit (202) that controls parallel execution of the decompression process and the decryption process, and controls the decryption process performed by the decryption processing unit (203) to the encrypted data output by the decompression processing unit (204), based on the decryption procedure.

2. The apparatus (200) according to claim 1, wherein the compression process is performed by inputting the auxiliary output data output by the last compression map, as the additional input data, at a time of performing the compression map to the encrypted data at a second time and after,

the decompression processing unit (204) inputs one piece of the compressed data and the final output data, at a time of first performing the compressed data to the decompression map, and inputs compressed data different from the one piece of the compressed data and auxiliary output data output at the last decompression map, to the decompression map, at the time of performing the compressed data to the decompression map at a second time and after, and

the decryption procedure determines in advance an order of a decompression process of the pieces of the compressed data and an order of a decryption process of the pieces of the encrypted data, based on an input order of the auxiliary output data to the compression map.

3. The apparatus (200) according to claim 1, wherein the encryption process is performed by encrypting the plain data by performing plural times of exponentiation or multiplication, and

the decryption processing unit (203) performs a decryption process to each of the pieces of the compressed data by performing plural times of exponentiation or multiplication.

4. The apparatus (200) according to claim 1, wherein the encryption process is performed by encrypting the plain data using a hash function, and

the decryption processing unit (203) performs a decryption process to each of the pieces of the compressed data using the hash function.

5. The apparatus (200) according to claim 4, wherein the encryption process is performed by encrypting the plain data using the hash function inputting a part of the encrypted data out of the pieces of the encrypted data, and

the decryption processing unit (203) performs a decryption process to each of the pieces of the compressed data using the hash function inputting a part of the encrypted data out of the pieces of the encrypted data.

6. The apparatus (200) according to claim 4, wherein the encryption process is performed by encrypting the plain data using the hash function inputting compressed data output by the compression map, and

the decryption processing unit (203) performs a decryption process to each of the pieces of the compressed data using the hash function inputting the compressed data.

7. The apparatus (200) according to claim 4, wherein the compression process is performed by performing a second compression map not inputting the additional input data and not outputting the auxiliary output data, to a part of the encrypted data out of the pieces of the encrypted data, thereby obtaining the compressed data, and

the decompression processing unit (204) performs a second decompression map not inputting the final output data or the auxiliary output data but outputting only the encrypted data, to a part of the compressed data out of the pieces of the compressed data, thereby obtaining the encrypted data.

8. The apparatus (200) according to claim 1, wherein the compression process is performed by compressing the pieces of the encrypted data using the compression map based on an algebraic torus, and

the decompression processing unit (204) decompresses the pieces of the compressed data using the compression map based on an algebraic torus.

9. The apparatus (200) according to claim 1, wherein the encryption process is performed by encrypting the plain data, based on a discrete logarithm problem on a finite field, and

the decryption processing unit (203) decrypts the pieces of the encrypted data that are decompressed, based on a discrete logarithm problem on a finite field.

**10.** An encryption processing system comprising:

an encryption processing apparatus (100; 900); and
a decryption processing apparatus (200; 950) connected to the encryption processing apparatus (100; 900) via a network (210), wherein
the encryption processing apparatus (100; 900) includes
an encryption processing unit (101) that performs an encryption process to plain data using a public key, and outputs a plurality of pieces of encrypted data,
a compression processing unit (102) that performs a compression map to each of the pieces of the encrypted data, and outputs compressed encrypted data including the pieces of the compressed data and final output data finally output as the auxiliary output data, the compression map being a process of outputting compressed data obtained by compressing the encrypted data and auxiliary output data as an intermediate output from the encrypted data and additional input data,
a transmitting unit (105) that transmits the compressed encrypted data to the decryption processing apparatus (200; 950),
a first storage unit (903) that stores an encryption procedure which determines in advance an order of an encryption process of the plain data and an order of a compression process of the pieces of the encrypted data, based on an output order of the pieces of the encrypted data in the encryption process and an input order of the pieces of the encrypted data and the additional input data to the compression map, and
a first control unit (902) that controls parallel execution of the encryption process and the compression process, and controls the compression process performed by the compression processing unit (102) to the pieces of the encrypted data output by the encryption processing unit (101), based on the encryption procedure,
the encryption processing unit (101) performs an encryption process to the plain data using the hash function inputting compressed data output by the compression map,
the decryption processing apparatus (200; 950) includes
a receiving unit (201) that receives the compressed encrypted data from the encryption processing apparatus (100; 900),
a storage unit (956) that stores a decryption procedure which determines in advance an order of a decompression process of the pieces of the compressed data and an order of a decryption process of the pieces of the encrypted data, based on an output order of the pieces of the encrypted data in the encryption process and an input order of the pieces of the encrypted data and the additional input data to the compression map,
a decompression processing unit (204) that performs a decompression map to the pieces of the compressed data included in the compressed encrypted data, thereby obtaining the pieces of the encrypted data having each of the pieces of the compressed data decompressed, the decompression map being a process of inputting the compressed data and either the final output data or the auxiliary output data and being a process of outputting the encrypted data and the auxiliary output data,
a decryption processing unit (953) that performs a decryption process to each of the pieces of the encrypted data, using a secret key corresponding to the public key, thereby obtaining the plain data, and
a second control unit (202) that that controls parallel execution of the decompression process and the decryption process, and controls the decryption process performed by the decryption processing unit (953) to the encrypted data output by the decompression processing unit (204), based on the decryption procedure, and
the decryption processing unit (953) performs a decryption process to each of the pieces of the encrypted data, using the hash function inputting the compressed data.

**11.** The system according to claim 10, wherein the compression process is performed by performing a second compression map not inputting the additional input data and not outputting the auxiliary output data, to a part of the encrypted data out of the pieces of the encrypted data, thereby obtaining the compressed data, and
the decompression processing unit (204) performs a second decompression map not inputting the final output data or the auxiliary output data but outputting only the encrypted data, to a part of the compressed data out of the pieces of the compressed data, thereby obtaining the encrypted data.

**12.** A decryption processing method performed by a decryption processing apparatus (200; 950), the method comprising:

receiving compressed encrypted data from an encryption processing apparatus (100; 900) via a network (210), the encryption processing apparatus (100; 900) performing an encryption process to plain data using a public key and output a plurality of pieces of encrypted data, and a compression process to perform a compression map to each of the pieces of the encrypted data to output compressed encrypted data obtained by compressing the encrypted data and auxiliary output data as an intermediate output from the encrypted data and additional input data, thereby outputting the compressed encrypted data including the pieces of the compressed data and final output data finally output as the auxiliary output data;

performing a decompression map to the pieces of the compressed data included in the compressed encrypted data, thereby obtaining the pieces of the encrypted data having each of the pieces of the compressed data decompressed, the decompression map being a process of inputting the compressed data and either the final output data or the auxiliary output data and being a process of outputting the encrypted data and the auxiliary output data;

performing a decryption process to each of the pieces of encrypted data, using a secret key corresponding to the public key, thereby obtaining the plain data; and

controlling parallel execution of the decompression process and the decryption process, and controlling the decryption process by the decryption processing unit (203) to the encrypted data output by the decompression processing unit (204), based on a decryption procedure of a storage unit that stores the decryption procedure which determines in advance an order of a decompression process of the pieces of the compressed data and an order of a decryption process of the pieces of the encrypted data, based on an output order of the pieces of the encrypted data in the encryption process and an input order of the pieces of the encrypted data and the additional input data to the compression map.

13. A computer program product having a computer readable medium including programmed instructions for performing a decryption process, wherein the instructions, when executed by a computer, cause the computer to perform:

receiving compressed encrypted data from an encryption processing apparatus (100; 900) via a network (210), the encryption processing apparatus (100; 900) performing an encryption process to plain data using a public key and output a plurality of pieces of encrypted data, and a compression process to perform a compression map to each of the pieces of the encrypted data to output compressed encrypted data obtained by compressing the encrypted data and auxiliary output data as an intermediate output from the encrypted data and additional input data, thereby outputting the compressed encrypted data including the pieces of the compressed data and final output data finally output as the auxiliary output data;

performing a decompression map to the pieces of the compressed data included in the compressed encrypted data, thereby obtaining the pieces of the encrypted data having each of the pieces of the compressed data decompressed, the decompression map being a process of inputting the compressed data and either the final output data or the auxiliary output data and being a process of outputting the encrypted data and the auxiliary output data;

performing a decryption process to each of the pieces of encrypted data, using a secret key corresponding to the public key, thereby obtaining the plain data; and

controlling parallel execution of the decompression process and the decryption process, and controlling the decryption process by the decryption processing unit (203) to the encrypted data output by the decompression processing unit (204), based on a decryption procedure of a storage unit that stores the decryption procedure which determines in advance an order of a decompression process of the pieces of the compressed data and an order of a decryption process of the pieces of the encrypted data, based on an output order of the pieces of the encrypted data in the encryption process and an input order of the pieces of the encrypted data and the additional input data to the compression map.

# FIG.1

ENCRYPTION PROCESSING APPARATUS — 100

101 — ENCRYPTION PROCESSING UNIT

PLAIN-DATA STORAGE UNIT — 103

102 — COMPRESSION PROCESSING UNIT

PUBLIC-KEY STORAGE UNIT — 104

TRANSMITTING UNIT — 105

↓ COMPRESSED ENCRYPTED DATA

— 210

↓ COMPRESSED ENCRYPTED DATA

DECRYPTION PROCESSING APPARATUS — 200

202 — PARALLEL-PROCESSING CONTROL UNIT

201 — RECEIVING UNIT

206 — PROCEDURE STORAGE UNIT

203 — DECRYPTION PROCESSING UNIT

207 — SECRET-KEY STORAGE UNIT

204 — DECOMPRESSION PROCESSING UNIT

205 — OUTPUT UNIT

# FIG.2

ElGamal ENCRYPTION

PUBLIC KEY (p, g, y)

PLAIN DATA m

r: GENERATE AT RANDOM

$$c_1 \leftarrow g^r \quad \cdots \; (4\text{-}1)$$

$$c_2 \leftarrow my^r \quad \cdots \; (4\text{-}2)$$

ENCRYPTED DATA $(c_1, c_2)$

SECRET KEY x

$$m \leftarrow c_2 c_1^{\,p\text{-}1\text{-}x} \quad \cdots \; (5)$$

PLAIN DATA m

# FIG.3

PUBLIC KEY (p, g, y)

PLAIN DATA m

ADDITIONAL INPUT $a_1$

301

r: GENERATE AT RANDOM

$$c_1 \leftarrow g^r \quad \cdots \; (4\text{-}1)$$

$$c_2 \leftarrow my^r \quad \cdots \; (4\text{-}2)$$

$$\theta(c_1, a_1) = (\gamma_1, a_2) \quad \cdots \; (6\text{-}1)$$

$$\theta(c_2, a_2) = (\gamma_2, a_3) \quad \cdots \; (6\text{-}2)$$

302

COMPRESSED
ENCRYPTED DATA $(\gamma_2, \gamma_1, a_3)$

SECRET KEY x

304

$$c'_1 \leftarrow c_1^{\,p\text{-}1\text{-}x} \quad \cdots \; (5\text{-}1)$$

$$m \leftarrow c_2 c'_1 \quad \cdots \; (5\text{-}2)$$

$$\theta^{-1}(\gamma_2, a_3) = (c_2, a_2) \quad \cdots \; (7\text{-}1)$$

$$\theta^{-1}(\gamma_1, a_2) = (c_1, a_1) \quad \cdots \; (7\text{-}2)$$

303

PLAIN DATA m

PARALLEL PROCESSING
NOT POSSIBLE

# FIG.4

PUBLIC KEY (p, g, y)

PLAIN DATA m          ADDITIONAL INPUT $a_1$

···100

r: GENERATE AT RANDOM

101

$c_2 \leftarrow my^r$ $\cdots$ (4-2)

$c_1 \leftarrow g^r$ $\cdots$ (4-1)

$\theta(c_2, a_1) = (\gamma_2, a'_2) \cdots$ (8-1)

$\theta(c_1, a'_2) = (\gamma_1, a'_3) \cdots$ (8-2)

102

COMPRESSED
ENCRYPTED DATA $(\gamma_2, \gamma_1, a'_3)$

SECRET KEY x

···200

203

$c'_1 \leftarrow c_1^{p-1-x}$ $\cdots$ (5-1)

$m \leftarrow c_2 c'_1$ $\cdots$ (5-2)

$\theta^{-1}(\gamma_1, a'_3) = (c_1, a'_2) \cdots$ (9-1)

$\theta^{-1}(\gamma_2, a'_2) = (c_2, a_1) \cdots$ (9-2)

204

PLAIN DATA m

PARALLEL PROCESSING
POSSIBLE

# FIG.5

START

RECEIVE COMPRESSED ENCRYPTED DATA $(\gamma_2, \gamma_2, a'_3)$ — S11

READ SECRET KEY, AND TORUS-COMPRESSION ElGamal ENCRYPTION PROCEDURE — S12

DETERMINE PROCESSES TO BE PERFORMED IN SERIES AND PROCESSES TO BE PERFORMED IN PARALLEL — S13

DECOMPRESS BY $\theta^{-1}(\gamma_1, a'_3)=(c_1, a'_2)$ — S14

PARALLEL EXECUTION

DECRYPT BY $c'_1 \leftarrow c_1^{P-1-x}$ — S15

DECOMPRESS BY $\theta^{-1}(\gamma_2, a'_2)=(c_2, a'_1)$ — S16

DECRYPT BY $m \leftarrow c_2 c'_1$ — S17

OUTPUT PLAIN DATA m — S18

END

# FIG.6

PUBLIC KEY $(p, g, \hat{g}, e, f, h)$

PLAIN DATA m

601

r: GENERATE AT RANDOM

$c_1 \leftarrow g^r \quad c_2 \leftarrow \hat{g}^r \quad b \leftarrow h^r \quad \cdots (10\text{-}1)$

$c_3 \leftarrow b \cdot m \quad \cdots (10\text{-}2)$

$\nu \leftarrow H(c_1, c_2, c_3) \quad \cdots (10\text{-}3)$

$c_4 \leftarrow e^r f^{r\nu} \quad \cdots (10\text{-}4)$

ENCRYPTED DATA
$(c_1, c_2, c_3, c_4)$

SECRET KEY
$(x_1, x_2, y_1, y_2, z_1, z_2)$

602

r: GENERATE AT RANDOM

$(c_1, c_2, c_3, c_4) \in^? \hat{G} \quad \cdots (11\text{-}1)$

$(c_1, c_2, c_3) \in^? G \quad \cdots (11\text{-}2)$

$b \leftarrow c_1^{z_1} c_2^{z_2} \quad \cdots (11\text{-}3)$

$m \leftarrow c_3 b^{-1} \quad \cdots (11\text{-}4)$

$\nu \leftarrow H(c_1, c_2, c_3) \quad \cdots (11\text{-}5)$

$c_4 =^? c_1^{x_1 + y_1 \nu} c_2^{x_2 + y_2 \nu} \quad \cdots (11\text{-}6)$

PLAIN DATA m

# FIG.7

**101**

r: GENERATE AT RANDOM

$c_1 \leftarrow g^r \quad c_2 \leftarrow \hat{g}^r \quad b \leftarrow h^r \quad \cdots \ (10\text{-}1)$

$c_3 \leftarrow b \cdot m \qquad\qquad \cdots \ (10\text{-}2)$

$\nu \leftarrow H(c_1, c_2, c_3) \quad \cdots \ (10\text{-}3)$

$c_4 \leftarrow e^{rf^{r\nu}} \qquad\qquad \cdots \ (10\text{-}4)$

**102**

$\theta(c_4, a_1) = (\gamma_4, a_2) \cdots (12\text{-}1)$

$\theta(c_3, a_2) = (\gamma_3, a_3) \cdots (12\text{-}2)$

$\theta(c_2, a_3) = (\gamma_2, a_4) \cdots (12\text{-}3)$

$\theta(c_1, a_4) = (\gamma_1, a_5) \cdots (12\text{-}4)$

COMPRESSED ENCRYPTED
DATA $(\gamma_4, \gamma_3, \gamma_2, \gamma_1, a_5)$

$c_1 \in^? \hat{G}, \ c_1 \in^? G \qquad\qquad \cdots \ (14\text{-}1)$

$c_2 \in^? \hat{G}, \ c_2 \in^? G \quad b \leftarrow c_1^{z_1} c_2^{z_2} \quad \cdots \ (14\text{-}2)$

$c_3 \in^? \hat{G}, \ c_3 \in^? G \quad m \leftarrow c_3 b^{-1} \quad \nu \leftarrow H(c_1, c_2, c_3) \ \cdots \ (14\text{-}3)$

$c_4 \in^? \hat{G} \qquad\qquad c_4 \leftarrow^? c_1^{x_1 + y_1 \nu} c_2^{x_2 + y_2 \nu} \quad \cdots \ (14\text{-}4)$

$\theta^{-1}(\gamma_1, a_5) = (c_1, a_4) \cdots (13\text{-}1)$

$\theta^{-1}(\gamma_2, a_4) = (c_2, a_3) \cdots (13\text{-}2)$

$\theta^{-1}(\gamma_3, a_3) = (c_3, a_2) \cdots (13\text{-}3)$

$\theta^{-1}(\gamma_4, a_2) = (c_4, a_1) \cdots (13\text{-}4)$

**203**

**204**

$\longleftarrow - - - - \longrightarrow$ : PARALLEL PROCESSING POSSIBLE

EP 2 091 175 A1

# FIG.8

```
        ( START )
            │
            ▼
┌───────────────────────────────────┐
│  RECEIVE COMPRESSED ENCRYPTED DATA │ ── S21
│  ($\gamma_4$, $\gamma_3$, $\gamma_2$, $\gamma_1$, $a_5$) │
└───────────────────────────────────┘
            │
            ▼
┌───────────────────────────────────┐
│  READ SECRET KEY, AND TORUS-       │ ── S22
│  COMPRESSION CRAMER-SHOUP ENCRYPTION│
│  PROCEDURE                          │
└───────────────────────────────────┘
            │
            ▼
┌───────────────────────────────────┐
│  DETERMINE PROCESSES TO BE PERFORMED│ ── S23
│  IN SERIES AND PROCESSES TO BE      │
│  PERFORMED IN PARALLEL              │
└───────────────────────────────────┘
            │
            ▼
┌───────────────────────────────────┐
│  DECOMPRESS BY $\theta^{-1}$ ($\gamma_1$, $a_5$)= ($c_1$, $a_4$) │ ── S24
└───────────────────────────────────┘
```

| | | |
|---|---|---|
| DETERMINE<br>$c_1 \in^? \widehat{G}$, $c_1 \in^? G$ ── S25 | PARALLEL EXECUTION | DECOMPRESS BY<br>$\theta^{-1}$ ($\gamma_2$, $a_4$)= ($c_2$, $a_3$) ── S26 |
| DECRYPT BY<br>$c_2 \in^? \widehat{G}$, $c_2 \in^? G$<br>$b \leftarrow c_1^{z_1} c_2^{z_2}$ ── S27 | PARALLEL EXECUTION | DECOMPRESS BY<br>$\theta^{-1}$ ($\gamma_3$, $a_3$)= ($c_3$, $a_2$) ── S28 |
| DECRYPT BY<br>$c_3 \in^? \widehat{G}$, $c_3 \in^? G$<br>$m \leftarrow c_3^{b-1}$<br>$\nu \leftarrow H(c_1, c_2, c_3)$ ── S29 | PARALLEL EXECUTION | DECOMPRESS BY<br>$\theta^{-1}$ ($\gamma_4$, $a_2$)= ($c_4$, $a_1$) ── S30 |
| DECRYPT BY<br>$c_4 \in^? \widehat{G}$<br>$c_4 =? c_1^{x_1+y_1\nu} c_1^{x_2+y_2\nu}$ ── S31 | | |

```
            ▼
┌───────────────────────────────────┐
│       OUTPUT PLAIN DATA m          │ ── S32
└───────────────────────────────────┘
            │
            ▼
         ( END )
```

# FIG.9

900

**ENCRYPTION PROCESSING APPARATUS**

902 — PARALLEL-
PROCESSING
CONTROL UNIT

903 — PROCEDURE
STORAGE UNIT

901 — ENCRYPTION
PROCESSING UNIT

103 — PLAIN-DATA
STORAGE UNIT

102 — COMPRESSION
PROCESSING UNIT

104 — PUBLIC-KEY
STORAGE UNIT

TRANSMITTING
UNIT — 105

↓ COMPRESSED
ENCRYPTED DATA

210

↓ COMPRESSED
ENCRYPTED DATA

950

**DECRYPTION PROCESSING APPARATUS**

202 — PARALLEL-
PROCESSING
CONTROL UNIT

201 — RECEIVING
UNIT

956 — PROCEDURE
STORAGE UNIT

953 — DECRYPTION
PROCESSING UNIT

207 — SECRET-KEY
STORAGE UNIT

204 — DECOMPRESSION
PROCESSING UNIT

205 — OUTPUT UNIT

# FIG.10

901

r: GENERATE AT RANDOM

$b \leftarrow h^r$      $\cdots$ (15-1)

$c_3 \leftarrow b \cdot m$      $\cdots$ (15-2)

$c_1 \leftarrow g^r$      $\cdots$ (15-3)

$c_2 \leftarrow \hat{g}^r$      $\cdots$ (15-4)

$\nu' \leftarrow H'(\gamma_1, \gamma_2, \gamma_3)$ $\cdots$ (15-5)

$c_4 \leftarrow e^{rf \; r\nu'}$      $\cdots$ (15-6)

102

$\theta(c_3, a_1) = (\gamma_3, a_2)$ $\cdots$ (16-1)

$\theta(c_1, a_2) = (\gamma_1, a_3)$ $\cdots$ (16-2)

$\theta(c_2, a_3) = (\gamma_2, a_4)$ $\cdots$ (16-3)

$\theta(c_4, a_4) = (\gamma_4, a_5)$ $\cdots$ (16-4)

COMPRESSED ENCRYPTED DATA $(\gamma_3, \gamma_1, \gamma_2, \gamma_4, a_5)$

953

$\nu' \leftarrow H(\gamma_1, \gamma_2, \gamma_3)$ $\cdots$ (18-1)

$c_4 \in^? \hat{G}$      $\cdots$ (18-2)

$c_2 \in^? \hat{G}, c_2 \in^? G$      $\cdots$ (18-3)

$c_1 \in^? \hat{G}, c_1 \in^? G \; c_4 =^? c_1^{x_1+y_1\nu'} \; c_2^{x_2+y_2\nu'} \; b \leftarrow c_1^{z_1} c_2^{z_2}$ $\cdots$ (18-4)

$c_3 \in^? \hat{G}, c_3 \in^? G \; m \leftarrow c_3^{b-1}$ $\cdots$ (18-5)

$\theta^{-1}(\gamma_4, a_5) = (c_4, a_4)$ $\cdots$ (17-1)

$\theta^{-1}(\gamma_2, a_4) = (c_2, a_3)$ $\cdots$ (17-2)

$\theta^{-1}(\gamma_1, a_3) = (c_1, a_2)$ $\cdots$ (17-3)

$\theta^{-1}(\gamma_3, a_2) = (c_3, a_1)$ $\cdots$ (17-4)

204

$\leftarrow - - - - \rightarrow$ PARALLEL PROCESSING POSSIBLE

# FIG.11

START

READ PLAIN DATA m, AND PUBLIC KEY — S41

READ TORUS-COMPRESSION CRAMER-SHOUP ENCRYPTION PROCEDURE — S42

DETERMINE PROCESSES TO BE PERFORMED IN SERIES AND PROCESSES TO BE PERFORMED IN PARALLEL — S43

ENCRYPT BY $b \leftarrow h^r$ — S44

ENCRYPT BY $c_3 \leftarrow b \cdot m$ — S45

ENCRYPT BY $c_1 \leftarrow g^r$ — S46

PARALLEL EXECUTION

COMPRESS BY $\theta(c_3, a_1) = (\gamma_3, a_2)$ — S47

ENCRYPT BY $c_2 \leftarrow \hat{g}^r$ — S48

PARALLEL EXECUTION

COMPRESS BY $\theta(c_1, a_2) = (\gamma_1, a_3)$ — S49

CALCULATE HASH VALUE BY $\nu' \leftarrow H(\nu_1, \nu_2, \nu_3)$ — S51

COMPRESS BY $\theta(c_2, a_3) = (\gamma_2, a_4)$ — S50

ENCRYPT BY $c_4 \leftarrow e_r f_r^{r\nu'}$ — S52

COMPRESS BY $\theta(c_4, a_4) = (\gamma_4, a_5)$ — S53

TRANSMIT COMPRESSED ENCRYPTED DATA $(\gamma_3, \gamma_1, \gamma_2, \gamma_4, a_5)$ — S54

END

# FIG.12

```
            ┌──────────┐
            │  START   │
            └──────────┘
                 │
                 ▼
┌─────────────────────────────────────┐
│  RECEIVE COMPRESSED ENCRYPTED DATA   │ ─── S61
│  ($\gamma_3$, $\gamma_1$, $\gamma_2$, $\gamma_4$, $a_5$)  │
└─────────────────────────────────────┘
                 │
                 ▼
┌─────────────────────────────────────┐
│  READ SECRET KEY, AND TORUS-         │ ─── S62
│  COMPRESSION CRAMER-SHOUP ENCRYPTION │
│  PROCEDURE                           │
└─────────────────────────────────────┘
                 │
                 ▼
┌─────────────────────────────────────┐
│  DETERMINE PROCESSES TO BE PERFORMED │ ─── S63
│  IN SERIES AND PROCESSES TO BE       │
│  PERFORMED IN PARALLEL               │
└─────────────────────────────────────┘
```

| | | |
|---|---|---|
| CALCULATE HASH VALUE BY $\nu' \leftarrow H(\gamma_1, \gamma_2, \gamma_3)$ — S64 | PARALLEL EXECUTION | DECOMPRESS BY $\theta^{-1}(\gamma_4, a_5) = (c_4, a_4)$ — S65 |
| DETERMINE $c_4 \hat{\in}\ ^?G$ — S66 | PARALLEL EXECUTION | DECOMPRESS BY $\theta^{-1}(\gamma_2, a_4) = (c_2, a_3)$ — S67 |
| DETERMINE $c_2 \hat{\in}\ ^?G$, $c_2 \in\ ^?G$ — S68 | PARALLEL EXECUTION | DECOMPRESS BY $\theta^{-1}(\gamma_1, a_3) = (c_1, a_2)$ — S69 |
| DECRYPT BY $c_1 \in\ ^?\hat{G}$, $c_1 \in\ ^?G$ $c_4 =\ ^? c_1^{x_1 + y_1 \nu'} c_2^{x_2 + y_2 \nu'}$ $b \leftarrow c_1^{z_1} c_2^{z_2}$ — S70 | PARALLEL EXECUTION | DECOMPRESS BY $\theta^{-1}(\gamma_3, a_2) = (c_3, a_1)$ — S71 |
| DECRYPT BY $c_3 \in\ ^?\hat{G}$, $c_3 \in\ ^?G$ $m \leftarrow c_3^{b-1}$ — S72 | | |

```
                 │
                 ▼
┌─────────────────────────────────────┐
│      OUTPUT PLAIN DATA m             │ ─── S73
└─────────────────────────────────────┘
                 │
                 ▼
            ┌──────────┐
            │   END    │
            └──────────┘
```

# FIG.13

901

**r: GENERATE AT RANDOM**

$b \leftarrow h^r$       $\cdots$ (19-1)

$c_3 \leftarrow b \cdot m$      $\cdots$ (19-2)

$c_1 \leftarrow g^r$       $\cdots$ (19-3)

$c_2 \leftarrow \hat{g}^r$       $\cdots$ (19-4)

$\nu' \leftarrow H(c_1, c_2, c_3)$    $\cdots$ (19-5)

$c_4 \leftarrow e^{rf \, r\nu'}$      $\cdots$ (19-6)

102

$\theta(c_3, a_1) = (\gamma_3, a_2)$   $\cdots$ (20-1)

$\theta(c_1, a_2) = (\gamma_1, a_3)$   $\cdots$ (20-2)

$\theta(c_2, a_3) = (\gamma_2, a_4)$   $\cdots$ (20-3)

$\rho(c_4) = \gamma'_4$      $\cdots$ (20-4)

COMPRESSED ENCRYPTED
DATA $(\gamma_3, \gamma_1, \gamma_2, a_4, \gamma'_4)$

953

$c_2 \in^? \hat{G}, \, c_2 \in^? G$   $\cdots$ (22-1)

$c_1 \in^? \hat{G}, \, c_1 \in^? G$    $b \leftarrow c_1^{z_1} c_2^{z_2}$     $\cdots$ (22-2)

$c_3 \in^? \hat{G}, \, c_3 \in^? G$    $m \leftarrow c_3^{b-1} \; \nu \leftarrow H(c_1, c_2, c_3) \cdots$ (22-3)

$c_4 \in^? \hat{G}$          $c_4 =^? c_1^{x_1 + y_1 \nu} \, c_2^{x_2 + y_2 \nu}$   $\cdots$ (22-4)

204

$\theta^{-1}(\gamma_2, a_4) = (c_2, a_3)$   $\cdots$ (21-1)

$\theta^{-1}(\gamma_1, a_3) = (c_1, a_2)$   $\cdots$ (21-2)

$\theta^{-1}(\gamma_3, a_2) = (c_3, a_1)$   $\cdots$ (21-3)

$\rho^{-1}(\gamma'_4) = c_4$      $\cdots$ (21-4)

$\longleftarrow \; - - - - \; \longrightarrow$ PARALLEL PROCESSING POSSIBLE

32

# FIG.14

START

READ PLAIN DATA m AND PUBLIC KEY — S81

READ TORUS-COMPRESSION CRAMER-SHOUP ENCRYPTION PROCEDURE — S82

DETERMINE PROCESSES TO BE PERFORMED IN SERIES AND PROCESSES TO BE PERFORMED IN PARALLEL — S83

ENCRYPT BY $b \leftarrow h_r$ — S84

ENCRYPT BY $c_3 \leftarrow b \cdot m$ — S85

ENCRYPT BY $c_1 \leftarrow g^r$ — S86

PARALLEL EXECUTION

COMPRESS BY $\theta(c_3, a_1) = (\gamma_3, a_2)$ — S87

ENCRYPT BY $c_2 \leftarrow \hat{g}^r$ — S88

PARALLEL EXECUTION

COMPRESS BY $\theta(c_1, a_2) = (\gamma_1, a_3)$ — S89

CALCULATE HASH VALUE BY $\nu' \leftarrow H(c_1, c_2, c_3)$ — S90

PARALLEL EXECUTION

COMPRESS BY $\theta(c_2, a_3) = (\gamma_2, a_4)$ — S91

ENCRYPT BY $c_4 \leftarrow e^r f^{r\nu'}$ — S92

COMPRESS BY $\rho(c_4) = \gamma'_4$ — S93

TRANSMIT COMPRESSED ENCRYPTED DATA $(\gamma_3, \gamma_1, \gamma_2, a_4, \gamma'_5)$ — S94

END

# FIG.15

```
START
```

TRANSMIT COMPRESSED ENCRYPTED DATA
$(\gamma_3, \gamma_1, \gamma_2, a_4, \gamma'_5)$ — S101

READ SECRET KEY, AND TORUS-COMPRESSION CRAMER-SHOUP ENCRYPTION PROCEDURE — S102

DETERMINE PROCESSES TO BE PERFORMED IN SERIES AND PROCESSES TO BE PERFORMED IN PARALLEL — S103

DECRYPT BY $c_2 \in^? \widehat{G}$, $c_2 \in^? G$ — S105

DECRYPT BY
$c_1 \in^? \widehat{G}$, $c_1 \in^? G$
$b \leftarrow c_1^{z_1} c_2^{z_2}$ — S107

$c_3 \in^? \widehat{G}$, $c_3 \in^? G$
$m \leftarrow c_3^{b-1}$
$\nu \leftarrow H(c_1, c_2, c_3)$ — S109

DECRYPT BY
$c_4 \in^? \widehat{G}$
$c_4 =^? c_1^{x_1 + y_1 \nu} c_2^{x_2 + y_2 \nu}$ — S111

PARALLEL EXECUTION

DECOMPRESS BY
$\theta^{-1}(\gamma_2, a_4) = (c_2, a_3)$ — S104

PARALLEL EXECUTION

DECOMPRESS BY
$\theta^{-1}(\gamma_1, a_3) = (c_1, a_2)$ — S106

PARALLEL EXECUTION

DECOMPRESS BY
$\theta^{-1}(\gamma_3, a_2) = (c_3, a_1)$ — S108

PARALLEL EXECUTION

DECOMPRESS BY
$\rho^{-1}(\gamma'_4) = c_4$ — S110

OUTPUT PLAIN DATA m — S112

```
END
```

Europäisches
Patentamt

European
Patent Office

Office européen
des brevets

**EUROPEAN SEARCH REPORT**

Application Number

EP 09 00 0564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2004/036362 A (INGRIAN NETWORKS INC [US]; METZGER BRIAN [US]; GOPALAKRISHNAN VENKITAC) 29 April 2004 (2004-04-29)<br>* abstract *<br>* figure 3 *<br>* page 3 - page 4 *<br>----- | 1-13 | INV.<br>H04L9/00 |
| A | US 5 479 512 A (WEISS KENNETH P [US])<br>26 December 1995 (1995-12-26)<br>* abstract *<br>* column 2 - column 3 *<br>* figure 3a *<br>----- | 1-13 | |
| A | WO 81/03560 A (MOSTEK CORP [US]; MUELLER J [US]; GILTNER M [US]; FIEST R [US])<br>10 December 1981 (1981-12-10)<br>* abstract *<br>* page 2 - page 5 *<br>----- | 1-13 | |

TECHNICAL FIELDS
SEARCHED      (IPC)

H04L

The present search report has been drawn up for all claims

| Place of search | Date of completion of the search | Examiner |
|---|---|---|
| Berlin | 11 June 2009 | San Millán Maeso, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 00 0564

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2009

| Patent document cited in search report | | Publication date | Patent family member(s) | | Publication date |
|---|---|---|---|---|---|
| WO 2004036362 | A | 29-04-2004 | AU | 2003279970 A1 | 04-05-2004 |
| US 5479512 | A | 26-12-1995 | NONE | | |
| WO 8103560 | A | 10-12-1981 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008036441 A

**Non-patent literature cited in the description**

- Torus-Based Cryptography. **K. Rubin ; A. Silverberg.** CRYPTO 2003. Springer LNCS, 2003, vol. 2729, 349-365

- Asymptotically Optimal Communication for Torus-based Cryptography. **M. van Dijk ; D. Woodruff.** CRYPTO 2004. Springer LNCS, 2004, vol. 3152, 157-178